# EUROPEAN PATENT APPLICATION

(11) **EP 4 592 327 A1**
(43) Date of publication of application: **30.07.2025**
(21) Application number: 25153242.0
(22) Date of filing: 22.01.2025
(51) Int. Cl.: C08G 18/10, C08G 18/12, C08G 18/24, C08G 18/32, C08G 18/40, C08G 18/42, C08G 18/44, C08G 18/48, C08G 18/66, C08G 18/76, C08G 64/02, D06N 3/14

(54) **CURABLE COMPOSITION AND SYNTHETIC LEATHER**

(30) Priority: 23.01.2024 JP 2024008174
(71) Applicant: ASAHI KASEI KABUSHIKI KAISHA, Tokyo 100-0006 (JP)
(72) Inventor: SENDA, Kosuke, Tokyo, 1000006 (JP)
(74) Representative: Strehl & Partner mbB

(57) **Abstract**

To provide a curable composition capable of providing synthetic leather having favorable low-temperature characteristics and having excellent balance of physical properties including flexibility (texture), chemical resistance and heat resistance, and synthetic leather. A curable composition including a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, a component (d): a polyester polyol, and a component (e): a polyisocyanate having an average number of functional groups per molecule, of 2 to 6, in which a total amount of the component (a) and the component (b) is 30% by mass to 70% by mass based on a total amount of all the polyol components in the composition.

## Description

### BACKGROUND OF THE INVENTION

### Field of the Invention

The present invention relates to a curable composition and synthetic leather.

### Description of the Related Art

Conventional synthetic leather has been obtained by coating a fibrous base material or a film-forming plate with a solution of a polyurethane resin obtained by polymerization with polyether polyol such as polypropylene glycol or polytetramethylene glycol, and coagulating the solution in water. Although having excellent flexibility and feeling, such synthetic leather is easily decomposed due to a component such as sweat and is problematic in terms of durability. There is also synthetic leather obtained by coagulating a solution of a polyurethane resin obtained by polymerization with polyester polyol obtained by reacting a hydroxy compound and a dibasic acid. This synthetic leather is problematic in terms of hydrolysis resistance.

For example, Japanese Patent No. 3142102 discloses synthetic leather obtained from a polyurethane resin obtained by polymerization with polycarbonate diol, as synthetic leather for solving the above problems. Japanese Patent No. 3142102 specifically discloses a porous sheet-shaped article obtained by allowing a urethane composition including a polyurethane formed from a polycarbonate diol, an organic isocyanate and a low molecular diol, and a polyurethane formed from a polyester-based diol, an organic diisocyanate and a low molecular diol to be incorporated or connected into a fiber base material and/or onto a fiber base material.

Japanese Patent Laid-Open No. 2003-119314 discloses a porous sheet material obtained by a wet film-forming method involving providing a solution of a polyurethane resin formed from a high molecular diol, an organic isocyanate and, if necessary, a chain elongating agent, to a substrate. The porous sheet material is characterized in that the high molecular diol is a mixed diol of a polycarbonate diol and a polyester diol, the polycarbonate diol is a copolymerized polycarbonate diol which includes 1,4-butanediol and one or more of other alkane diols each having 4 to 6 carbon atoms, which contains 50 to 90% by mol of 1,4-butanediol based on the total molar number of the diol and which has a number average molecular weight of 500 to 5000, and the coagulation value of the polyurethane resin is 7 to 14.

Japanese Patent Laid-Open No. 2004-346094 discloses a surface film layer of synthetic leather, obtained by using a polyurethane resin including a polyester polycarbonate diol obtained by a transesterification reaction of an aliphatic oligocarbonate diol obtained by a transesterification reaction of an aliphatic diol and a dialkyl carbonate, and a polyester polyol obtained by ring-opening addition polymerization of a cyclic ester compound with a compound having an active hydrogen group as an initiator, and a polyisocyanate and a chain extender.

Japanese Patent No. 4177318 discloses a porous sheet material obtained by wet coagulation, characterized in that the porous sheet material is obtained by reacting a high molecular diol including an polycarbonate diol (a1) formed from an alkane diol having 4 or more and 6 or less carbon atoms and a polycarbonate diol (a2) formed from an alkane diol having 7 or more and 12 or less carbon atoms, both the polycarbonate diols being copolymerized polycarbonate diols and the percentages by mass of (a1) based on the total mass of (a1) and (a2) being 10% or more and 80% or less, an organic isocyanate and a chain elongating agent.

Japanese Patent Laid-Open No. 2009-185260 discloses synthetic leather including a surface layer and a fiber cloth, in which the surface layer is formed from a surface layer material-forming composition for fiber laminates, the composition includes a main agent and a curing agent, the main agent is a polycarbonate diol obtained from 1,6-hexanediol and a low molecular carbonate, the curing agent includes a modified polyisocyanate (B1) of hexamethylene diisocyanate, having a number average molecular weight of 350 to 500 and an average number of functional groups (f) of 2 ≤ f < 3, and an isocyanurate-modified polyisocyanate (B2) of hexamethylene diisocyanate, having an average number of functional groups of f ≥ 3, the (B1): (B2) equals to 50:50 to 95:5 (mass ratio), and both the main agent and the curing agent contain no organic solvent.

However, although having hydrolysis resistance, the synthetic leather disclosed in Japanese Patent No. 3142102, Japanese Patent Laid-Open No. 2003-119314, Japanese Patent Laid-Open No. 2004-346094, Japanese Patent No. 4177318, and Japanese Patent Laid-Open No. 2009-185260 is not sufficient in sweat resistance in an application where high durability is required, for example, an automobile sheet.

Japanese Patent Laid-Open No. 2013-108196 proposes synthetic leather formed of a specific polycarbonate diol (copolymerized polycarbonate diol derived from 1,5-pentanediol and 1,6-hexanediol) in order to provide synthetic leather which has excellent balance of physical properties such as sweat resistance and flexibility and furthermore which causes no crack or wrinkle during storage. However, the polycarbonate diol described in Japanese Patent Laid-Open No. 2013-108196 requires the use of a large amount of an organic solvent in polyurethane polymerization, and is desired to be further improved from the viewpoint of environmental load.

Japanese Patent Laid-Open No. 2016-8234 proposes a polyurethane for synthetic leather having excellent balance of physical properties including flexibility, chemical resistance, low-temperature characteristics, heat resistance and texture. There is here proposed a polyurethane for synthetic leather, obtained by reacting at least (a) a compound having two or more isocyanate groups in one molecule, (b) a chain extender and (c) a polycarbonate diol, in which the polycarbonate diol (c) is a polycarbonate diol having a hydroxyl value of 20 mg-KOH/g or more and 45 mg-KOH/g or less, having a glass transition temperature of -30°C or less, as measured by a differential scanning calorimeter, and allowing a dihydroxy compound obtained by hydrolysis of the polycarbonate diol to have an average number of carbon atoms of 3 or more and 5.5 or less. However, the polyurethane for synthetic leather, disclosed in Japanese Patent Laid-Open No. 2016-8234, also requires the use of a large amount of an organic solvent in polyurethane polymerization, and is not desirable from the viewpoint of environmental load.

In recent years, an environment-responsive polyurethane has been proposed. For example, Japanese Patent Laid-Open No. 2014-105250 proposes a two-liquid-type non-solvent polyurethane for synthetic leather, the polyurethane including a urethane prepolymer composition used in the form of a high molecular product by a reaction of a crosslinking agent with active hydrogen in a component, in which the urethane prepolymer composition contains at least 20 to 80% by mass of a hydroxyl group-terminated urethane prepolymer having a hydroxyl value of 10 to 100 mgKOH/g and further contains 20 to 80% by mass of an oligomer having a hydroxyl value of 20 to 400 mgKOH/g and having no urethane bond, and capable of being crosslinked with the crosslinking agent while serving as a medium of the polymer, and is at least in the form of a liquid at a temperature of 30°C with having a substantially 100% of a non-volatile content, and the polyurethane including 90 to 150% by equivalent of a polyisocyanate crosslinking agent having a NCO content of 5 to 35% by mass relative to the average hydroxyl value of the urethane prepolymer composition.

However, the polyurethane prepolymer composition for synthetic leather disclosed in Japanese Patent Laid-Open No. 2014-105250 leads to the use of an ether-based polyol having a hydroxyl value of 20 to 400 mgKOH/g, such as poly-THF or THF-neopentyl glycol copolymerized polyol, as an oligomer having no urethane bond in order to achieve non-solvent composition, and thus has reduced heat resistance and has the problem of limited applications.

In order to solve the above problems, an object of the present invention is to provide a curable composition capable of providing synthetic leather having favorable low-temperature characteristics and having excellent balance of physical properties including flexibility (texture), chemical resistance and heat resistance, and synthetic leather with the curable composition.

### SUMMARY OF THE INVENTION

The present inventors have made intensive studies, and as a result, have found that environment-responsive synthetic leather having excellent balance of physical properties including flexibility (texture), chemical resistance, low-temperature flexibility and heat resistance, and also allowing decreased amount of solvent used can be provided by a curable composition including a polycarbonate diol, a polyether polyol and a polyester polyol each having a predetermined structure, or a predetermined isocyanate group-terminated prepolymer composition or hydroxyl group-terminated prepolymer derived from such a polyol, and a predetermined polyisocyanate, leading to completion of the present invention.

In other words, the present invention includes the following aspects.
<1> A curable composition comprising:
   a component (a): a polycarbonate polyol having a hydroxyl value of 40 to 75 mgKOH/g,
   a component (b): a polycarbonate polyol having a hydroxyl value of 100 to 280 mgKOH/g,
   a component (c): a polyether polyol,
   a component (d): a polyester polyol, and
   a component (e): a polyisocyanate having an average number of functional groups per molecule, of 2 to 6, wherein
   a total amount of the component (a) and the component (b) is 30% by mass to 70% by mass based on a total amount of all the polyol components in the composition.
<2> The curable composition according to <1>, comprising:
   a component (f): an isocyanate group-terminated prepolymer comprising a unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol, and a unit derived from a component (e): a polyisocyanate having an average number of functional groups per molecule, of 2 to 6.
<3> A curable composition comprising:
   a component (f): an isocyanate group-terminated prepolymer comprising a unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol, and a unit derived from a component (e): a polyisocyanate having an average number of functional groups per molecule, of 2 to 6, as constituent units, and
   all components not comprised in the constituent units of the component (f), among the component (a), the component (b), the component (c) and the component (d), wherein
   a total amount of a total amount of a unit derived from the component (a) and a unit derived from the component (b) in the constituent units in the component (f) and a total amount of the component (a) and the component (b) is 30% by mass to 70% by mass based on a total amount of all the polyol components in the composition.
<4> A curable composition comprising:
   a component (h): a hydroxyl group-terminated prepolymer comprising a unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol, and a unit derived from a component (e): a polyisocyanate having an average number of functional groups per molecule, of 2 to 6,
   all components not comprised in the constituent units of the component (h), among the component (a), the component (b), the component (c), and the component (d), and
   the component (e), wherein
   a total amount of a total amount of a unit derived from the component (a) and a unit derived from the component (b) in the constituent units in the component (h) and a total amount of the component (a) and the component (b) is 30% by mass to 70% by mass based on a total amount of all the polyol components in the composition.
<5> A curable composition comprising:
   a component (f): an isocyanate group-terminated prepolymer comprising a unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol, and a unit derived from a component (e): a polyisocyanate having an average number of functional groups per molecule, of 2 to 6, as constituent units,
   a component (h): a hydroxyl group-terminated prepolymer comprising a unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol, and a unit derived from a component (e): a polyisocyanate having an average number of functional groups per molecule, of 2 to 6,
   all components not comprised in the constituent units of the component (f) and the component (h), among the component (a), the component (b), the component (c), and the component (d), and
   optionally the component (e), wherein
   a total amount of a total amount of a unit derived from the component (a) and a unit derived from the component (b) in the constituent units in the component (f), a total amount of a unit derived from the component (a) and a unit derived from the component (b) in the constituent units in the component (h), and a total amount of the component (a) and the component (b) is 30% by mass to 70% by mass based on a total amount of all the polyol components in the composition.
<6> The curable composition according to any one of <1> to <5>, wherein the polycarbonate polyols of the component (a) and the component (b) each comprise a repeating unit represented by the following formula (1) and a terminal hydroxyl group. 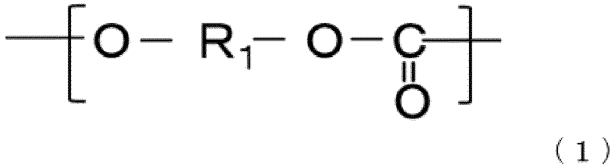 wherein R₁ is a divalent aliphatic or alicyclic hydrocarbon having 2 to 15 carbon atoms.
<7> The curable composition according to <6>, wherein 50% by mol or more of the repeating unit represented by the formula (1) comprises at least two repeating units selected from the formula (2), formula (3), and formula (4). 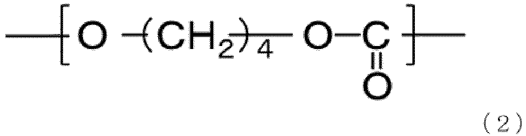 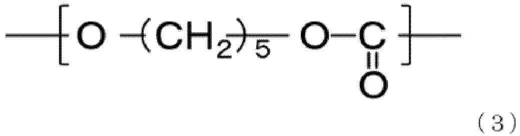 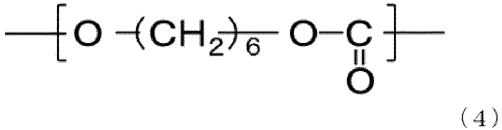
<8> The curable composition according to any one of <1> to <7>, comprising a component (g): a chain elongating agent.
<9> The curable composition according to any one of <1> to <8>, wherein the component (c): a polyether polyol and the component (d): a polyester polyol each have a hydroxyl value of 40 to 75 mgKOH/g.
<10> The curable composition according to any one of <1> to <9>, comprising 40% by mass or less of an inert organic solvent based on a total amount of the composition.
<11> The curable composition according to any one of <1> to <10>, to be used in an adhesion layer for synthetic leather.
<12> Synthetic leather produced from the curable composition according to any one of <1> to <11>.

### Advantageous Effects of Invention

According to the curable composition of the present invention, a curable composition capable of providing synthetic leather having favorable low-temperature characteristics and having excellent balance of physical properties including flexibility (texture), chemical resistance and heat resistance, and synthetic leather with the curable composition can be provided.

### BRIEF DESCRIPTION OF THE DRAWINGS

Figure 1 is a cross-sectional view of one example of synthetic leather produced by using the curable composition of the present invention; and
Figure 2 is a diagram illustrating one example of a production process chart of synthetic leather by use of the curable composition of the present invention.

### DETAILED DESCRIPTION OF THE INVENTION

Hereinafter, a mode for carrying out the present invention (hereinafter, abbreviated as "the present embodiment".) is described in detail. The present invention is not limited to the following embodiments, and can be variously modified and then carried out within the gist thereof.

A curable composition of the present embodiment includes
a component (a): a polycarbonate polyol having a hydroxyl value of 40 to 75 mgKOH/g,
a component (b): a polycarbonate polyol having a hydroxyl value of 100 to 280 mgKOH/g,
a component (c): a polyether polyol,
a component (d): a polyester polyol, and
a component (e): a polyisocyanate having an average number of functional groups per molecule, of 2 to 6, in which
the total amount of the component (a) and the component (b) is 30% by mass to 70% by mass based on the total amount of all the polyol components in the composition. The curable composition of the present embodiment is cured to thereby, namely, react the component (a) and the components (b), (c) and (d), and, if necessary, a chain elongating agent (component (g)) and the component (e) to form a polyurethane. The polyurethane obtained by the reaction can be used in synthetic leather. Herein, the "synthetic leather" has the concept of not only synthetic leather with a knitted fabric/woven fabric as a base fabric, but also artificial leather with a non-woven fabric as a base fabric.

The synthetic leather obtained by the curable composition of the present embodiment has favorable low-temperature characteristics and has excellent balance of physical properties including flexibility (texture), chemical resistance and heat resistance. The curable composition of the present embodiment can also serve as an environment-responsive curable composition which allows for saving of the amount of a solvent used or no need for use of any solvent at all in production of such excellent synthetic leather.

The component (a), the component (b), the component (c), the component (d), the component (e), and, if necessary, the component (g) are used in the curable composition of the present embodiment.

The curable composition of the present embodiment may be a curable composition as a mixture obtained by compounding the component (a), the component (b), the component (c), the component (d), the component (e), and, if necessary, the component (g) constituting the composition, and may be a curable composition as a mixture obtained by preparing an isocyanate group-terminated prepolymer composition obtained by reacting one or more selected from the component (a), the component (b), the component (c), the component (d), and, if necessary, the component (g) and compounding the isocyanate group-terminated prepolymer composition, and one or more among the component (a), the component (b), the component (c), the component (d), and, if necessary, the component (g). Herein, two or more of such isocyanate group-terminated prepolymers may be produced and each compounded.

The curable composition of the present embodiment may be a curable composition as a mixture obtained by preparing a hydroxyl group-terminated prepolymer composition obtained by reacting one or more selected from the component (a), the component (b), the component (c), the component (d), and, if necessary, the component (g) and compounding the hydroxyl group-terminated prepolymer composition, and one or more among the component (a), the component (b), the component (c), the component (d), and, if necessary, the component (g). Herein, two or more of such hydroxyl group-terminated prepolymers may be produced and each compounded.

The composition of the present embodiment encompasses a curable composition of an aspect shown below. Such an aspect below can be achieved by, for example, a prepolymer method described below.

One composition of the present embodiment, with an isocyanate group-terminated prepolymer, is, for example, a curable composition including the following isocyanate group-terminated prepolymer.

Specifically, a curable composition is exemplified which includes a component (f): an isocyanate group-terminated prepolymer containing a "unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol" and a "unit derived from a component (e): a polyisocyanate having an average number of functional groups per molecule, of 2 to 6".

The isocyanate group-terminated prepolymer is obtained by, for example, reacting one or more polyols selected from the group consisting of the component (a) to the component (d), and the polyisocyanate of the component (e) in advance.

One example of such a curable composition including the isocyanate group-terminated prepolymer can be, for example, a curable composition including the isocyanate group-terminated prepolymer of the component (f), and all components not included in the constituent units of the component (f), among the component (a), the component (b), component (c) and component (d). Herein, "all components not included in the constituent units of the component (f), among the component (a), the component (b), component (c) and component (d)" mean all the remaining components not selected in the group consisting of four components of the component (a) to the component (d), with respect to unit(s) derived from one or more polyols selected from the group consisting of four components of the component (a) to the component (d) contained as the constituent units of the component (f). For example, in a case where the component (f) has the units derived from the component (a) and the component (b), "all components not included in the constituent units of the component (f), among the component (a), the component (b), component (c) and component (d)" correspond to the components (c) and (d).

The isocyanate group-terminated prepolymer composition of the component (f) may include unreacted components (a), (b), (c), and (d).

One composition of the present embodiment, with a hydroxyl group-terminated prepolymer, is, for example, a curable composition including the following hydroxyl group-terminated prepolymer.

Specifically, a curable composition is exemplified which includes:
a component (h): a hydroxyl group-terminated prepolymer containing a "unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol", and a "unit derived from a component (e): a polyisocyanate having an average number of functional groups per molecule, of 2 to 6",
the isocyanate group-terminated prepolymer of the component (f), and/or, the component (e), and
all components (in the case of inclusion of the component (f), all components not included in the constituent units of the component (f) and the component (h)) not included in the constituent units of the component (h), among the component (a), the component (b), the component (c), and the component (d).

The hydroxyl group-terminated prepolymer is obtained by, for example, reacting one or more polyols selected from the group consisting of the component (a) to the component (d), and the polyisocyanate of the component (e) in advance. The hydroxyl group-terminated prepolymer composition of the component (h) may include unreacted components (a), (b), (c), and (d).

Herein, "all components not included in the constituent units of the component (h), among the component (a), the component (b), the component (c), and the component (d)" and "all components not included in the constituent units of the components (f) and (h), among the component (a), the component (b), the component (c), and the component (d)" mean all the remaining components not selected in the group consisting of four components of the component (a) to the component (d), with respect to unit(s) derived from one or more polyols selected from the group consisting of four components of the component (a) to the component (d) contained as the constituent units of the component (h) (or the component (f) and the component (h)), as in those described above. For example, in a case where the component (h) (or the component (f) and the component (h)) has the units derived from the component (a) and the component (b), "all components not included in the constituent units of the component (h) (or the component (f) and the component (h)), among the component (a), the component (b), component (c) and component (d)" correspond to the components (c) and (d).

The synthetic leather obtained from the curable composition of the present embodiment has favorable low-temperature characteristics and has excellent balance of physical properties including flexibility (texture), chemical resistance and heat resistance. Synthetic leather obtained from the curable composition of the present embodiment is environment-responsive synthetic leather which can be produced with a decreased amount of solvent used.

### <Component (a) and component (b)>

In the curable composition of the present embodiment, at least two polycarbonate polyols (component (a) and component (b)) different in hydroxyl value are used. It is considered that such two polycarbonate diols different in hydroxyl value are high in solubility in a solvent regardless of the amount of a hydroxyl group and thus can allow synthetic leather to be produced with a decreased amount of solvent used as compared with other polycarbonate polyols. It is also considered that advantages of a polycarbonate polyol low in hydroxyl value (high in molecular weight) and advantages of a polycarbonate diol high in hydroxyl value (low in molecular weight) are well balanced and the balance of physical properties including flexibility (texture), chemical resistance, low-temperature characteristics and heat resistance is excellent.

One of the polycarbonate polyols for use in the curable composition of the present embodiment is a polycarbonate polyol (component (a)) having a hydroxyl value of 40 to 75 mgKOH/g. The hydroxyl value of the component (a) is preferably 45 to 70 mgKOH/g, further preferably 50 to 65 mgKOH/g.

The hydroxyl value of the component (a) is 40 mgKOH/g or more and thus the viscosity of a curable composition obtained can be kept low and the amount of an organic solvent used can be decreased. The hydroxyl value of the component (a) is 75 mgKOH/g or less and thus synthetic leather obtained tends to be enhanced in flexibility (texture) and low-temperature characteristics.

The melt viscosity at 50°C of the component (a) is preferably 3000 to 25000 mPa·s, more preferably 5000 to 18000 mPa·s, further preferably 7000 to 16000 mPa·s. The melt viscosity at 50°C of the component (a) is 3000 mPa·s or more and thus synthetic leather obtained tends to be enhanced in flexibility and low-temperature characteristics. The melt viscosity at 50°C of the component (a) is 25000 mPa·s or less and thus the viscosity of a curable composition obtained can be kept low and the amount of an organic solvent used can be decreased.

One of the polycarbonate polyols for use in the curable composition of the present embodiment is a polycarbonate polyol (component (b)) having a hydroxyl value of 100 to 280 mgKOH/g. The hydroxyl value of the component (b) is preferably 130 to 250 mgKOH/g, more preferably 160 to 240 mgKOH/g.

The hydroxyl value of the component (b) is 100 mgKOH/g or more and thus the viscosity of a curable composition obtained can be kept low and the amount of an organic solvent used can be decreased. The hydroxyl value of the component (b) is 280 mgKOH/g or less and thus synthetic leather obtained has excellent flexibility (texture) and low-temperature characteristics.

The melt viscosity at 50°C of the component (b) is preferably 150 to 600 mPa·s, more preferably 180 to 500 mPa·s, further preferably 200 to 400 mPa·s. The melt viscosity at 50°C of the component (b) is 150 mPa·s or more and thus synthetic leather obtained tends to have excellent flexibility (texture) and low-temperature characteristics. The melt viscosity at 50°C of the component (b) is 600 mPa·s or less and thus the viscosity of a curable composition obtained can be kept low and the amount of an organic solvent used can be decreased.

The average number of hydroxyl groups in each one molecule of the component (a) and the component (b) is preferably 1.7 to 3.5, more preferably 1.8 to 3.0, further preferably 2.0 to 2.5.

The component (a) and the component (b) are each preferably a polycarbonate polyol having a repeating unit represented by formula (1) and a terminal hydroxyl group. In the present embodiment, the structure of the polycarbonate polyol as the component (a) and the structure of the polycarbonate polyol as the component (b) may be the same or different.

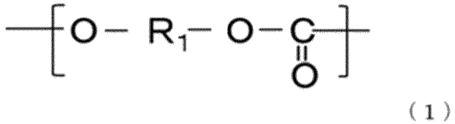

In the formula (1), R₁ represents a divalent aliphatic or alicyclic hydrocarbon having 2 to 15 carbon atoms.

The component (a) and the component (b) may each contain an ether structure and an ester structure, in addition to the structure of the polycarbonate polyol. In a case where the component (a) and the component (b) each have any other structure such as an ether structure or an ester structure, the content of the repeating unit represented by formula (1) in each of the component (a) or the component (b) is preferably 50% by mol or more, further preferably 70% by mol or more.

The component (a) and the component (b) are not particularly limited and can be, for example, synthesized by using a bifunctional diol compound, if necessary, a tri- or higher functional polyhydric alcohol, and carbonic acid ester, as raw materials, according to a transesterification reaction described in, for example, "Polymer Reviews vol. 9, pages 9 to 20".

The bifunctional diol compound for use in the transesterification reaction is not particularly limited, and examples thereof include diols each having a divalent aliphatic or alicyclic hydrocarbon backbone having 2 to 15 carbon atoms. Specific examples of the bifunctional diol compound include ethylene glycol, 1,3-propanediol, 2-methyl-1,3-propanediol, 1,4-butanediol, neopentyl glycol, 1,5-pentanediol, 1,6-hexanediol, 1,7-heptanediol, 1,8-octanediol, 1,9-nonanediol, 1,10-decanediol, 2-methyl-1,8-octanediol, 1,11-undecanediol, 1,12-dodecanediol, 1,13-tridecanediol, 1,14-tetradecanediol, 1,15-pentadecanediol, 2-isopropyl-1,4-butanediol, 2-ethyl-1,6-hexanediol, 3-methyl-1,5-pentanediol, 2,4-dimethyl-1,5-pentanediol, 2,4-diethyl-1,5-pentanediol, 1,3-cyclohexanediol, 1,4-cyclohexanediol and 1,4-cyclohexanedimethanol.

Such a bifunctional diol compound may be used singly or in combinations of two or more kinds thereof.

In particular, an alkylene diol having 3 to 10 carbon atoms is preferable and an alkylene diol having 4 to 6 carbon atoms is more preferable, from the viewpoint that a curable composition having excellent flexibility (touch), chemical resistance, low-temperature characteristics and heat resistance is obtained. Two or more kinds of alkylene diols are preferably used in combination.

The bifunctional diol compound has 2 or more carbon atoms and thus not only the viscosity of the curable composition can be kept low and the amount of an organic solvent used can be decreased, but also synthetic leather obtained tends to be enhanced in flexibility and low-temperature characteristics. The bifunctional diol compound has 15 or less carbon atoms and thus synthetic leather obtained tends to have excellent chemical resistance.

Two or more kinds of the bifunctional diol compounds are used in combination and thus a polycarbonate diol obtained has reduced regularity of a structural unit and reduced crystallinity, resulting in a tendency to obtain a liquid polycarbonate diol at ordinary temperature (25°C). Thus, the amount of an organic solvent used tends to be able to be decreased.

In the present embodiment, not only such a bifunctional diol, but also, if necessary, a tri- or higher functional polyhydric alcohol compound can be used as each raw material of the component (a) and the component (b).

The polyhydric alcohol compound is not particularly limited, and examples thereof include trimethylolethane, trimethylolpropane, hexanetriol, pentaerythritol and glycerin. Such a polyhydric alcohol is used and thus the average number of hydroxyl groups in each one molecule of the component (a) and the component (b) tends to be able to be easily adjusted in the range of 1.7 to 3.5.

In the present embodiment, 50% by mol or more of the repeating unit represented by the formula (1) preferably includes at least two repeating units selected from formula (2), formula (3) and formula (4). The contents of the repeating units of the formula (2), formula (3) and formula (4) are each preferably 70% by mol or more, further preferably 80% by mol or more.

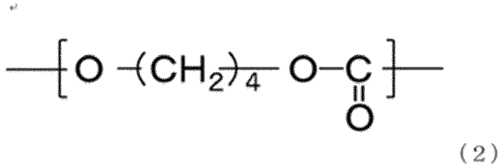

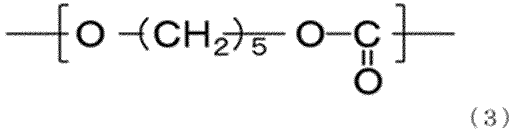

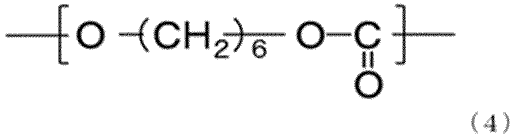

Such at least two repeating units selected from the formula (2), formula (3) and formula (4) are included at 50% by mol or more relative to the repeating unit represented by the formula (1) and thus synthetic leather obtained has excellent flexibility (touch), chemical resistance, low-temperature characteristics and heat resistance, and also tends to allow decreased amount of an inert organic solvent used. The upper limit of the proportion (% by mol) of the at least two repeating units selected from the formula (2), formula (3) and formula (4) relative to the repeating unit represented by formula (1) is not particularly limited, and is usually 100% by mol or less.

In the present embodiment, in a case where two repeating units are selected from the formula (2), formula (3) and formula (4), the ratio between the two repeating units (hereinafter, also designated as "ratio of copolymerization") on a molar ratio is 90:10 to 10:90, preferably 70:30 to 30:70, more preferably 60:40 to 40:60. The ratio of copolymerization is in the above range and thus the crystallinity of a polycarbonate diol tends to be reduced to thereby obtain synthetic leather having high flexibility, favorable low-temperature characteristics and touch. Furthermore, the ratio of copolymerization is in this range and thus the amount of an inert organic solvent used tends to be able to be decreased.

In the present embodiment, in a case where three repeating units are selected from the formula (2), formula (3) and formula (4), the proportion of each of the structural units of the formula (2), formula (3) and formula (4) is preferably 5% by mol or more, more preferably 10% by mol or more, further preferably 20% by mol or more under the assumption that the total of such three repeating units of the formula (2), formula (3) and formula (4) is 100% by mol. The proportion of each of such three repeating units of the formula (2), formula (3) and formula (4) in the total of such three repeating units of the formula (2), formula (3) and formula (4) is in the above range and thus the crystallinity of a polycarbonate diol tends to be reduced to thereby obtain synthetic leather having high flexibility, favorable low-temperature characteristics and touch. Furthermore, the proportion of each of such three repeating units of the formula (2), formula (3) and formula (4) is in the above range and thus the amount of an inert organic solvent used tends to be able to be decreased.

Examples of the carbonic acid ester which can be used for synthesis of the component (a) and the component (b) include dialkyl carbonates such as dimethyl carbonate, diethyl carbonate, dipropyl carbonate and dibutyl carbonate; diaryl carbonates such as diphenyl carbonate; and alkylene carbonates such as ethylene carbonate, trimethylene carbonate, 1,2-propylene carbonate, 1,2-butylene carbonate, 1,3-butylene carbonate and 1,2-pentylene carbonate. The carbonic acid ester here used is preferably dimethyl carbonate, diethyl carbonate, diphenyl carbonate or ethylene carbonate from the viewpoints of availability and ease of condition setting of a polymerization reaction.

A catalyst may or may not be added in production of the component (a) and the component (b). In a case where a catalyst is added, the catalyst can be freely selected from catalysts for use in a usual transesterification reaction. The catalyst here used is, for example, any of metals such as lithium, sodium, potassium, rubidium, cesium, magnesium, calcium, strontium, barium, zinc, aluminum, titanium, cobalt, germanium, tin, lead, antimony, arsenic and cerium, and metal salts thereof, metal alkoxides thereof and organic compounds including such metals. Among these catalysts, an organic compound including titanium, tin, or lead is preferable. The amount of the catalyst used is usually 0.00001 to 0.1% based on the mass of the bifunctional diol compound as a raw material and the tri- or higher functional polyhydric alcohol, if necessary, optionally included.

The method for producing the component (a) and the component (b) in the present embodiment can include synthesis by a transesterification reaction using the bifunctional diol compound, if necessary, the tri- or higher functional polyhydric alcohol, and the carbonic acid ester as raw materials, as described above.

More specifically, the transesterification reaction is performed according to the following procedure.

First, one or more bifunctional diol compounds at a predetermined ratio, if necessary, one or more tri- or higher functional polyhydric alcohols at a predetermined ratio, and one or more carbonic acid esters at a predetermined ratio are admixed and subjected to a transesterification reaction under ordinary pressure or reduced pressure in the presence or absence of a transesterification catalyst at a temperature of 100 to 200°C, preferably 140 to 180°C.

Subsequently, any alcohol formed during the reaction and derived from the carbonic acid esters is distilled off to thereby obtain a polycarbonate diol having a molecular weight of about 300 to 500 g/mol.

Next, unreacted carbonic acid esters and bifunctional diols, and tri- or higher functional polyhydric alcohols optionally included are distilled off under reduced pressure at 130 to 230°C, preferably 150 to 200°C, and the component (a) and the component (b) each having a desired hydroxyl value can be obtained by a condensation reaction.

The compositional ratio between the component (a) and the component (b) and the average number of hydroxyl groups in each one molecule in the components can be adjusted by controlling the initial ratio of components loaded, the amounts of raw materials distilled off in production, and the amount of a reaction product.

The component (a) and the component (b) used in the present embodiment may be each a commercially available product. Examples include, but not particularly limited, trade name "Duranol" series manufactured by Asahi Kasei Corporation, trade name "ETERNACOLL" series manufactured by UBE Corporation, trade names "Kuraray Polyol C" series and "Kuraray Polyol F" series manufactured by Kuraray Co., Ltd., trade name "Placcel" series manufactured by Daicel Corporation, trade name "Nippollan" series manufactured by Tosoh Corporation, "Oximer" series manufactured by Perstorp AB, and trade name "BENEBiOL" series manufactured by Mitsubishi Chemical Corporation. These may be used singly or in any combinations of two or more kinds thereof.

### <Component (c)>

A component (c): a polyether polyol is used in the curable composition of the present embodiment. Use of ether polyol not only can contribute to flexibility and low-temperature characteristics of synthetic leather, but also can contribute to an enhancement in resistance to moist heat of synthetic leather.

The polyether polyol used in the curable composition of the present embodiment is not particularly limited, and is desirably a polyether polyol having a hydroxyl value of 40 to 75 mgKOH/g. The hydroxyl value of the component (c) is preferably 45 to 70 mgKOH/g, further preferably 50 to 65 mgKOH/g.

The hydroxyl value of the component (c) is 40 mgKOH/g or more and thus the viscosity of a curable composition obtained can be kept low and the amount of an organic solvent used can be decreased. The hydroxyl value of the component (c) is 75 mgKOH/g or less and thus synthetic leather obtained tends to be more enhanced in flexibility (texture) and low-temperature characteristics.

The melt viscosity at 50°C of the component (c) is preferably 200 to 2000 mPa·s, more preferably 300 to 1500 mPa·s, further preferably 500 to 1000 mPa·s. The melt viscosity at 50°C of the component (c) is 200 mPa·s or more and thus synthetic leather obtained tends to be enhanced in flexibility and low-temperature characteristics. The melt viscosity at 50°C of the component (c) is 2000 mPa·s or less and thus the viscosity of a curable composition obtained can be kept low and the amount of an organic solvent used can be decreased.

The average number of hydroxyl groups in one molecule of the component (c) is preferably 1.7 to 3.5, more preferably 1.8 to 3.0, further preferably 2.0 to 2.5.

The number of carbon atoms in a main chain of the component (c) is not particularly limited, and the number of carbon atoms in the main chain is preferably 2 to 4 from the viewpoint of availability. Furthermore, the content of an oxygen atom is preferably lower from the viewpoint of suppression of a reduction in water resistance due to water absorption of polyurethane, and the number of carbon atoms in the main chain is more preferably 3 to 4. The polyether polyol may be used singly or in combinations of two or more kinds thereof.

Specific examples of the polyether polyol include, but not particularly limited, polytetramethylene ether glycol, polytetramethylene ether glycol having an alkyl side chain, polytrimethylene ether glycol, polypropylene glycol, polyethylene glycol, and any copolymer of two or more kinds of these glycols; and a random copolymer or a block copolymer of ethylene oxide and propylene oxide, or a random copolymer or a block copolymer of ethylene oxide and butylene oxide. In particular, polytetramethylene ether glycol, polytrimethylene ether glycol, and the like are preferable.

The component (c) used in the present embodiment may be a commercially available product. The commercially available product is not particularly limited, and can be available as any of trade names "Polytetramethylene Ether Glycol (PTMG)" and "BioPTMG" manufactured by Mitsubishi Chemical Corporation, trade name "Terathane" series manufactured by Invista, "PolyTHF" series manufactured by BASF SE, "PTG" series manufactured by Hodogaya Chemical Co., Ltd., "Polymeg" series manufactured by LyondellBasel Industries, "Arcol" series manufactured by Bayer AG, "EcoTrion" series manufactured by SK Chemicals Co., Ltd., "Plonon" series manufactured by NOF Corporation, "Sannix" series manufactured by Sanyo Chemical Industries, Ltd., "Adeka Polyether" series manufactured by ADEKA Corporation, and "Polylite" series, manufactured by DIC Corporation.

Examples of the component (c) include one obtained with, for example, any method of the following (1) to (2).
(1) a polyether polyol or polytetramethylene ether glycol obtained by adding a single alkylene oxide or a mixture thereof to a single polyhydric alcohol or a mixture thereof
(2) a polyether polyol obtained by reacting a polyfunctional compound with an alkylene oxide

Examples of the polyhydric alcohol include glycerin and propylene glycol. Examples of the alkylene oxide include ethylene oxide and propylene oxide.

In the present embodiment, not only such a bifunctional diol, but also, if necessary, a tri- or higher functional polyhydric alcohol compound can be used as a starting raw material of the component (c). The polyhydric alcohol compound is not particularly limited, and examples thereof include trimethylolethane, trimethylolpropane, hexanetriol, pentaerythritol and glycerin. Such a polyhydric alcohol is used and thus the average number of hydroxyl groups in one molecule of the component (c) tends to be able to be easily adjusted in the range of 1.7 to 3.5.

### <Component (d)>

A component (d): a polyester polyol is used in the curable composition of the present embodiment. The ester polyol can be used to result in tendencies to contribute to an enhancement in adhesion force of layers of synthetic leather and also improve adhesiveness to a polyester fiber as a representative base fabric. In addition, the balance of physical properties including flexibility (texture), chemical resistance, low-temperature characteristics and heat resistance can be kept.

The component (d) used in the curable composition of the present embodiment is not particularly limited and is preferably a polyester polyol having a hydroxyl value of 40 to 75 mgKOH/g. The hydroxyl value of the component (d) is preferably 45 to 70 mgKOH/g, further preferably 50 to 65 mgKOH/g.

The hydroxyl value of the component (d) is 40 mgKOH/g or more and thus the viscosity of a curable composition obtained can be kept low and the amount of an organic solvent used can be decreased. The hydroxyl value of the component (d) is 75 mgKOH/g or less and thus synthetic leather obtained tends to be enhanced in flexibility (texture) and low-temperature characteristics.

The component (c): a polyether polyol and the component (d): a polyester polyol preferably each have a hydroxyl value of hydroxyl value 40 to 75 mgKOH/g.

The melt viscosity at 50°C of the component (d) is preferably 500 to 7000 mPa·s, more preferably 800 to 5000 mPa·s, further preferably 1000 to 4000 mPa·s. The melt viscosity at 50°C of the component (d) is 500 mPa·s or more and thus synthetic leather obtained tends to be enhanced in flexibility and low-temperature characteristics. The melt viscosity at 50°C of the component (d) is 7000 mPa·s or less and thus the viscosity of a curable composition obtained can be kept low and the amount of an organic solvent used can be decreased.

The average number of hydroxyl groups in one molecule of the component (d) is preferably 1.7 to 3.5, more preferably 1.8 to 3.0, further preferably 2.0 to 2.5.

The component (d) is not particularly limited, and examples thereof include any polyester polyol of the following (1) or (2).
(1) a polyester polyol resin obtained by a condensation reaction of a single dibasic acid or a mixture of two or more kinds of dibasic acids, and a single bifunctional diol compound and/or a single polyhydric alcohol, or a mixture of two or more kinds thereof
(2) a polycaprolactone polyol obtained by ring-opening polymerization of ε-caprolactone with a bifunctional diol compound and/or a polyhydric alcohol

The dibasic acid is not particularly limited, and examples thereof include carboxylic acids such as succinic acid, adipic acid, azelaic acid, sebacic acid, dimer acid, maleic anhydride, phthalic anhydride, isophthalic acid, terephthalic acid, naphthalenedicarboxylic acid and 1,4-cyclohexanedicarboxylic acid.

The bifunctional diol compound is not particularly limited, and examples thereof include ethylene glycol, 1,3-propanediol, 2-methyl-1,3-propanediol, 1,4-butanediol, neopentyl glycol, 1,5-pentanediol, 1,6-hexanediol, 1,7-heptanediol, 1,8-octanediol, 1,9-nonanediol, 1,10-decanediol, 2-methyl-1,8-octanediol, 1,11-undecanediol, 1,12-dodecanediol, 1,13-tridecanediol, 1,14-tetradecanediol, 1,15-pentadecanediol, 2-isopropyl-1,4-butanediol, 2-ethyl-1,6-hexanediol, 3-methyl-1,5-pentanediol, 2,4-dimethyl-1,5-pentanediol, 2,4-diethyl-1,5-pentanediol, 1,3-cyclohexanediol, 1,4-cyclohexanediol and 1,4-cyclohexanedimethanol. The polyhydric alcohol compound is not particularly limited, and examples thereof include trimethylolethane, trimethylolpropane, hexanetriol, pentaerythritol and glycerin.

The number of carbon atoms in a main chain of the component (d) is not particularly limited, and the number of carbon atoms in the main chain is preferably 2 to 9 in the case of each of the bifunctional diol compound and the polyhydric alcohol and is preferably 4 to 10 in the case of the dibasic acid, from the viewpoint of availability. Furthermore, the content of a carbon atom is preferably higher from the viewpoint of suppression of a reduction in water resistance due to water absorption of polyurethane, and is more preferably 4 to 6 in the case of each of the bifunctional diol compound and the polyhydric alcohol and more preferably 4 to 10 in the case of the dibasic acid. The polyester polyol may be used singly or in combinations of two or more kinds thereof.

Specific examples of the component (d) include, but not particularly limited, polyethylene adipate diol, polypropylene adipate diol, polybutylene adipate diol, polypentylene adipate diol, polyhexylene adipate diol, polyethylenebutylene adipate diol, polyhexamethylene isophthalate adipate diol, polyethylene succinate diol, polybutylene succinate diol, polyethylene sebacate diol, polybutylene sebacate diol, poly(3-methyl-1,5-pentylene adipate)diol, poly-y-butyrolactone diol, poly-δ-valerolactone diol, poly-ε-caprolactone diol, a polycondensate of 1,6-hexanediol and dimer acid, and a castor oil-modified polyol. In particular, preferable are polyethylene adipate diol, polypropylene adipate diol, polybutylene adipate diol, polypentylene adipate diol, polyhexylene adipate diol, poly(3-methyl-1,5-pentylene adipate)diol and poly-ε-caprolactone diol, and further preferable are polyhexylene adipate diol, poly(3-methyl-1,5-pentylene adipate)diol and poly-ε-caprolactone diol.

The method for producing the component (d) in the present embodiment can include synthesis by a transesterification reaction using the bifunctional diol compound, if necessary, the tri- or higher functional polyhydric alcohol, and the dibasic acid as raw materials, as described above.

More specifically, the transesterification reaction is performed according to the following procedure.

First, one or more bifunctional diol compounds at a predetermined ratio, if necessary, one or more tri- or higher functional polyhydric alcohols at a predetermined ratio, and one or more dibasic acids at a predetermined ratio are admixed and subjected to a transesterification reaction under ordinary pressure or reduced pressure in the presence or absence of a transesterification catalyst at a temperature of 100 to 280°C, preferably 140 to 220°C.

Subsequently, the component (d) having a desired hydroxyl value can be obtained by a condensation reaction in which water generated during the reaction is distilled off.

The compositional ratio and the average number of hydroxyl groups in one molecule of the component (d) can be adjusted by controlling the initial ratio of components loaded, the amounts of raw materials distilled out in production, and the amount of a reaction product.

The component (d) used in the present embodiment may be a commercially available product. The commercially available product is not particularly limited, and examples thereof include trade name "Kyowapol" series manufactured by Kyowa Hakko Chemical Co., Ltd., trade name "Kuraray Polyol" series manufactured by Kuraray Co., Ltd., trade name "Placcel" series manufactured by Daicel Corporation, trade name "Polylite" series manufactured by DIC Corporation, trade name "Nippollan" series manufactured by Tosoh Corporation, and "Desmophen" series manufactured by Bayer AG.

In the present embodiment, a preferable mass ratio between the component (a) and the component (b) is preferably 20 to 80% by mass, more preferably 30 to 70% by mass, further preferably 40 to 60% by mass in terms of the proportion of the component (a) included based on 100% by mass in total of the component (a) and the component (b). The proportion of the component (a) is 20% by mass or more and thus synthetic leather obtained tends to have superior flexibility (texture) and low-temperature characteristics. The proportion of the component (a) is 80% by mass or less and thus the viscosity of a curable composition obtained tends to be able to be kept low and the amount of an organic solvent used tends to be able to be decreased.

The polyols of the components (a), (b), (c) and (d) are used in the curable composition of the present embodiment, and any polyol other than the components (a), (b), (c) and (d) may be, if necessary, used in combination. Such any polyol other than the components (a), (b), (c) and (d) is not particularly limited as long as it can be used in usual polyurethane production, and examples thereof include an acrylic polyol, a polyolefin polyol, a castor oil polyol, and any polycarbonate polyol other than the component (a) and the component (b).

The total amount of the component (a) and the component (b) in the curable composition of the present embodiment is 30% by mass to 70% by mass based on the total amount of all the polyol components in the composition. The mass proportion of the component (a) and the component (b) based on the total mass of the component (a) and the component (b) and any polyol other than the components (total amount of all the polyol components in the composition) is more preferably 40% by mass or more. The mass proportion of the component (a) and the component (b) is 30% by mass or more and thus synthetic leather to be formed tends to have excellent balance among flexibility (touch), chemical resistance, low-temperature characteristics and heat resistance. On the other hand, addition of such any polyol other than the components can contribute to the effect of reducing the viscosity of the curable composition of the present embodiment and these polyols can be used in combination as long as no performance is impaired.

A case where the curable composition of the present embodiment includes the prepolymer of the component (f) or the prepolymer of the component (h), described below, is as follows.

### i) A case where the prepolymer of the component (f) is included

The total amount of the total amount of a unit derived from the component (a) and a unit derived from the component (b) in the constituent units in the component (f) and the total amount of the component (a) and the component (b) is 30% by mass to 70% by mass based on the total amount of all the polyol components in the composition.

### ii) A case where the prepolymer of the component (h) is included

The total amount of the total amount of a unit derived from the component (a) and a unit derived from the component (b) in the constituent units in the component (h) and the total amount of the component (a) and the component (b) is 30% by mass to 70% by mass based on the total amount of all the polyol components in the composition.

### iii) A case where the prepolymer of the component (f) and the prepolymer of the component (h) are included

The total amount of the total amount of a unit derived from the component (a) and a unit derived from the component (b) in the constituent units in the component (f), the total amount of a unit derived from the component (a) and a unit derived from the component (b) in the constituent units in the component (h), and the total amount of the component (a) and the component (b) is 30% by mass to 70% by mass based on the total amount of all the polyol components in the composition.

The total amount of the unit derived from the component (a) or the component (b) in the prepolymer can be calculated by, for example, one or a combination of a method involving measurement with an infrared spectrophotometer (IR), a method involving dissolution in a deuterated solvent and measurement with a nuclear magnetic resonator (1H-NMR, 13C-NMR), an analysis method of the compositional ratio of a polyol described below, and known analysis methods such as gel permeation chromatography (GPC), high-performance liquid chromatography (HPLC), and matrix-assisted laser desorption/ionization time-of-flight mass spectrometry MALDI-TOFMS.

### <Component (e)>

A polyisocyanate having an average number of functional groups per molecule, of 2 to 6 (component (e)), is used in the curable composition of the present embodiment.

Examples of the component (e) in the present embodiment can include aromatic diisocyanates such as 2,4-tolylene diisocyanate, 2,6-tolylene diisocyanate and a mixture thereof, diphenylmethane-4,4'-diisocyanate (MDI), naphthalene-1,5-diisocyanate (NDI), 3,3'-dimethyl-4,4'biphenylene diisocyanate (TODI), polymethylene polyphenylene polyisocyanate (polymeric MDI, PMDI), polycarbodiimide-modified diphenylmethane diisocyanate; aromatic aliphatic diisocyanates such as xylylene diisocyanate (XDI) and phenylene diisocyanate; and aliphatic diisocyanates such as 4,4'-methylenebiscyclohexyl diisocyanate (hydrogenation (also referred to as hydrogenated) MDI), hexamethylene diisocyanate (HDI), isophorone diisocyanate (IPDI) and cyclohexane diisocyanate (hydrogenated XDI).

The component (e) for use in the present embodiment can also be a polyisocyanate having 2.1 or more isocyanate groups on average in one molecule. The polyisocyanate having 2.1 or more isocyanate groups on average in one molecule can be any of aromatic polyisocyanates such as crude MDI and crude TDI; derivatives of aliphatic isocyanates such as HDI and IPDI, specifically diisocyanate derivatives such as biuret, allophanate, uretdione and isocyanurate; and polyhydric alcohol adducts.

The polyisocyanate having 2.1 or more isocyanate groups in one molecule is not particularly limited, and is, for example, available as any of Sumijule 44S and 44V70 (both manufactured by Sumika Bayer Urethane Co., Ltd.), Desmodur HL (manufactured by Sumika Bayer Urethane Co., Ltd.) as a copolymer of TDI and HDI, various Duranates manufactured by Asahi Kasei Corporation, namely, Duranate 24A-100, Duranate 22A-75PX, Duranate 18H-70B, Duranate 21S-75E, Duranate THA-100, Duranate TPA-100, Duranate TKA-100, Duranate TLA-100, Duranate TUL-100, Duranate MFA-75X, Duranate TSA-100, Duranate TSS-100, Duranate TSE-100, Duranate D-101, Duranate D-201, Duranate P-301-75E, Duranate E-402-90T, Duranate E-405-80T, Duranate ME20-100, Duranate 17B-60PX, Duranate TPA-B80X, Duranate MF-B60X, Duranate E-402-B80T, Duranate ME20-B80S, Duranate WB40-100, Duranate WB40-80D, Duranate WT20-100 and Duranate WT30-100.

Furthermore, the component (e) here used can also be, for example, a so-called blocked isocyanate obtained by blocking with any known blocking agent, for example, lower alcohols such as butanol and 2-ethylhexanol, methyl ethyl ketone oxime, lactams, phenols, imidazoles, and active methylene compounds.

The amount of the component (e) used is adjusted so that the amount represented as [Isocyanate equivalent of component (e)]/[Total of hydroxyl equivalents of components (a), (b), (c) and (d)] is preferably 0.7 to 1.3, more preferably 0.8 to 1.2, further preferably 0.9 to 1.1. The [Isocyanate equivalent of component (e)]/[Total of hydroxyl equivalents of components (a), (b), (c) and (d)] is 0.7 or more and 1.3 or less and thus a polyurethane obtained can be properly controlled in molecular weight and mechanical properties such as strength, elongation and wear resistance tend to be excellent.

The component (e) here used is preferably an aromatic polyisocyanate such as MDI. Such an aromatic polyisocyanate is used to result in a tendency to obtain synthetic leather having excellent mechanical properties. A curable composition, in which such an aromatic polyisocyanate such as MDI is used as the component (e), can be suitably used mainly as an adhesive of a base fabric and a skin layer of synthetic leather. A curable composition, in which an aliphatic polyisocyanate such as hydrogenated MDI is used as the component (e), can provide synthetic leather having superior weather resistance than the curable composition described above and thus is suitably used as a curable composition for a skin layer.

### <Component (g)>

A chain extender: component (g) can be, if necessary, used in the curable composition of the present embodiment. The component (g) can be used in order to adjust physical properties such as strength, wear properties and flexibility of a polyurethane after curing. The chain extender is not particularly limited, and examples thereof include short-chain diols such as ethylene glycol, 1,3-propanediol and 1,4-butanediol; polyhydric alcohols such as trimethylolethane, trimethylolpropane, hexanetriol, pentaerythritol and glycerin; diamines such as ethylenediamine, propylenediamine, hexamethylenediamine, tolylenediamine, xylylenediamine, diphenyldiamine, diaminodiphenylmethane, diaminocyclohexylmethane, piperazine, 2-methylpiperazine and isophoronediamine; and aminoalcohols such as ethanolamine, diethanolamine and triethanolamine. In particular, the component (g) is preferably a diol or a polyhydric alcohol having 2 to 6 carbon atoms, more preferably a diol having 2 to 6 carbon atoms, from the viewpoint of a decrease of a local reaction with isocyanates. The chain elongating agent may be used singly or in combinations of two or more kinds thereof.

The amount of the component (g) added based on the total of the components (a), (b), (c) and (d) is preferably 30% by mass or less, more preferably 3% by mass or more and 20% by mass or less, further preferably 5% by mass or more and 10% by mass or less. It is desirable to also adjust the amount of isocyanate according to the amount of the chain extender added. For example, the amount of the component (e) is adjusted so that the isocyanate equivalent of the component (e) used based on the total obtained by adding the equivalent (g) of a functional group of the component (g) to the total of the hydroxyl equivalents of the components (a), (b), (c) and (d) is preferably 0.7 to 1.3 equivalents, more preferably 0.8 to 1.2 equivalents, further preferably 0.9 to 1.1 equivalents.

### <Inert organic solvent>

The curable composition of the present embodiment may include, if necessary, an inert organic solvent in order to adjust workability in urethane production. The content of the inert organic solvent based on the total amount of the curable composition is preferably 40% by mass or less, more preferably 3% by mass or more and 30% by mass or less, further preferably 5% by mass or more and 20% by mass or less. Addition of the inert organic solvent is effective in order to not only decrease the viscosity of the curable composition and enhance workability in synthetic leather production, but also more enhance the appearance of synthetic leather obtained. However, the solvent used in a process is released into the air through a drying step unless an expensive solvent recovery apparatus is used, and thus may lead to an increase in VOC (Volatile Organic Compounds). Preferably, the content of the inert organic solvent is kept low or no solvent is ideally used at all from the viewpoint of a reduction in environmental load.

The inert organic solvent is not particularly limited as long as it is an organic solvent substantially inert to a polyisocyanate, and is preferably one having no active hydrogen. The inert organic solvent is not particularly limited, and examples thereof include hydrocarbons such as pentane, hexane, heptane, octane, decane, petroleum ether, petroleum benzine, ligroin, petroleum spirits, cyclohexane and methylcyclohexane; fluorine-based inert liquids, for example, fluorinated oils such as trichlorofluoroethane, tetrachlorodifluoroethane and perfluoroether; and perfluorocyclohexane, perfluorobutyltetrahydrofuran, perfluorodecalin, perfluoro-n-butylamine, perfluoropolyether and dimethylpolysiloxane. These may be used singly or as a mixture thereof. Examples of the inert organic solvent further include any single or mixed solvent of methyl ethyl ketone (also designated as MEK), acetone, ethyl acetate, butyl acetate, toluene, xylene, dimethylformamide (DMF), dimethylacetamide (DMAc), dimethylsulfoxide, diethylformamide, dimethylacetamide, N-methylpyrrolidone, N-ethylpyrrolidone, tetrahydrofuran (THF) and dioxane.

### <Other additive(s)>

Any additive(s) such as a curing accelerator (catalyst), a filler, a flame retardant, a dye, an organic or inorganic pigment, a release agent, a fluidity modifier, a plasticizer, an antioxidant, an ultraviolet absorber, a light stabilizer, a defoamer, a leveling agent, a colorant and/or a foaming agent can be added to the curable composition of the present embodiment depending on the intended use.

The curing accelerator is not particularly limited, and examples thereof include amines and a metal catalyst.

The curing accelerator being any of amines is not particularly limited, and examples thereof include monoamines such as triethylamine and N,N-dimethylcyclohexylamine, diamines such as tetramethylethylenediamine, and triamines, cyclic amines, alcohol amines such as dimethylethanolamine, and ether amines.

The metal catalyst is not particularly limited, and examples thereof include potassium acetate, potassium 2-ethylhexanoate, calcium acetate, lead octylate, dibutyltin dilaurate, tin octylate, bismuth neodecanoate, bismuth oxycarbonate, bismuth 2-ethylhexanoate, zinc octylate, zincneodecanoate, phosphine and phosphorine.

The filler and the pigment are not particularly limited, and examples thereof include a woven fabric, a glass fiber, a carbon fiber, a polyamide fiber, mica, kaolin, bentonite, a metal powder, an azo pigment, carbon black, clay, silica, talc, gypsum, alumina white and barium carbonate.

The release agent, the fluidity modifier and the leveling agent are not particularly limited, and examples thereof include silicone, aerosil, wax, stearate and polysiloxane such as BYK-331 (manufactured by BYK-Chemie).

The additives for use in the present embodiment are preferably at least an oxidation inhibitor, a light stabilizer, a heat stabilizer and a flame retardant.

The oxidation inhibitor here used is not particularly limited, and can be, for example, any of phosphorus compounds such as aliphatic, aromatic or alkyl-substituted aromatic esters of phosphoric acid or phosphorus acid, hypophosphorous acid derivatives, phenylphosphonic acid, phenylphosphinic acid, diphenylphosphonic acid, polyphosphonate, dialkyl pentaerythritol diphosphite and dialkylbisphenol A diphosphite; phenol-based derivatives, in particular, hindered phenol compounds, and sulfur-containing compounds such as thioether-based, dithionic acid salt-based, mercaptobenzimidazole-based, and thiocarbanilide-based compounds and thiodipropionic acid esters; and tin-based compounds such as tin malate and dibutyltin monooxide. These may be used singly or in combinations of two or more kinds thereof.

The flame retardant is not particularly limited, and examples thereof include halogen-based flame retardants, for example, bromine-based flame retardants such as tetrabromobisphenol A, decabromodiphenyl ether, octabromodiphenyl ether, hexabromocyclododecane, decabromodiphenylethane, bistribromophenoxyethane, polydibromophenylene oxide, tetrabromophthalic anhydride, a TBA carbonate oligomer and polystyrene bromide, and chlorine-based flame retardants such as chlorinated polyphenyl, perchloropentacyclodecane and a hexachlorocyclopentadiene derivative; phosphorus-based flame retardants such as triphenyl phosphate, tricresyl phosphate, trixylenylphosphate, triethylphosphate, cresyl diphenylphosphate, xylenyldiphenylphosphate, cresyl bis(2,6-xylenyl)phosphate, 2-ethylhexyl phosphate, dimethylmethylphosphate, resorcinol bis(diphenyl)phosphate, bisphenol A bis(diphenyl)phosphate, bisphenol A bis(dicresyl)phosphate, diethyl-N,N-bis(2-hydroxyethyl)aminomethylphosphate, phosphoric amide, organic phosphine oxide and red phosphorus; nitrogen-based flame retardants such as ammonium polyphosphate, phosphazene, cyclophosphazene, 9,10-dihydro-9-oxa-10-phosphaphenanthrene-10-oxide, a 9,10-dihydro-9-oxa-10-phosphaphenanthrene-10-oxide derivative, triazine, melamine cyanurate, succinoguanamine, ethylenedimelamine, triguanamine, triazinyl cyanurate, melem, melam, tris(β-cyanoethyl)isocyanurate, acetoguanamine, guanylmelamine sulfate, melem sulfate and melam sulfate; metal salt-based flame retardants such as potassium diphenylsulfone-3-sulfonate, an aromatic sulfonimide metal salt and an alkali metal polystyrenesulfonate; hydrated metal-based flame retardants such as aluminum hydroxide, magnesium hydroxide, dolomite, hydrotalcite, barium hydroxide, basic magnesium carbonate, zirconium hydroxide and tin oxide; inorganic flame retardants such as silica, aluminum oxide, iron oxide, titanium oxide, manganese oxide, magnesium oxide, zirconium oxide, zinc oxide, molybdenum oxide, cobalt oxide, bismuth oxide, chromium oxide, tin oxide, antimony oxide, nickel oxide, copper oxide, tungsten oxide, zinc borate, zinc metaborate, barium metaborate, zinc carbonate, magnesium carbonate, calcium carbonate, barium carbonate and zinc stannate; and silicone-based flame retardants such as silicone powder, and in particular a phosphorus-based flame retardant is suitably used from the viewpoint of environmental load.

### <Method for producing curable composition>

The curable composition of the present embodiment can be produced by a production method generally industrially used.

The curable composition of the present embodiment can be produced by, for example, a method (hereinafter, referred to as "one-shot method") involving collectively mixing and reacting the component (a), the component (b), the component (c), the component (d) and the component (e), and optionally the component (g).

As described above, the curable composition of the present embodiment may be a curable composition as a mixture obtained by compounding the component (a), the component (b), the component (c), the component (d) and the component (e), and, if necessary, the component (g) constituting the composition, and may be a curable composition as a mixture obtained by preparing an isocyanate group-terminated prepolymer composition obtained by reacting one or more selected from the component (a), the component (b), the component (c) and the component (d), and, if necessary, the component (g) with the component (e), and compounding the isocyanate group-terminated prepolymer composition and one or more among the component (a), the component (b), the component (c) and the component (d), and, if necessary, the component (g). Herein, two or more of such isocyanate group-terminated prepolymers may be produced and each compounded.

In other words, the curable composition of the present embodiment can be produced by, for example, a method (hereinafter, referred to as "prepolymer method". The prepolymer may be used singly or in combinations of two or more kinds thereof) involving first reacting the component (a) and/or the component (b) and/or the component (c) and/or the component (d), if necessary, the component (g), and the component (e) in advance to prepare a prepolymer composition having an isocyanate group at a terminal thereof, and compounding the component (a) and/or the component (b) and/or the component (c) and/or the component (d), and, if necessary, the component (g).

As described above, the curable composition may be a curable composition as a mixture obtained by preparing a hydroxyl group-terminated prepolymer composition obtained by reacting one or more selected from the component (a), the component (b), the component (c) and the component (d), and, if necessary, the component (g) with the component (e), and compounding the hydroxyl group-terminated prepolymer composition, and one or more among the component (a), the component (b), the component (c) and the component (d), and, if necessary, the component (g), and one or more of the component (e) and/or the isocyanate group-terminated prepolymer prepared as described above. Herein, two or more of such hydroxyl group-terminated prepolymers may be produced and each compounded.

In other words, the curable composition of the present embodiment can be produced by, for example, a method (hereinafter, referred to as "prepolymer method". The prepolymer may be used singly or in combinations of two or more kinds thereof) involving first reacting the component (a) and/or the component (b) and/or the component (c) and/or the component (d), if necessary, the component (g), and the component (e) in advance to prepare a prepolymer composition having a hydroxyl group at a terminal thereof and then compounding one or more among the component (a), the component (b), the component (c) and the component (d), and, if necessary, the component (g), and the component (e) and/or the isocyanate group-terminated prepolymer prepared as described above.

### (One-shot method)

In a case where the curable composition is obtained by the one-shot method, the amount of the component (e) used is usually preferably 0.7 to 1.3 equivalents, more preferably 0.8 to 1.2 equivalents, further preferably 0.9 to 1.1 equivalents in terms of isocyanate equivalent based on the total of the hydroxyl equivalents of the components (a), (b), (c), (d) and (g). The amount of the component (e) used is 0.7 equivalents or more and 1.3 equivalents or less and thus the molecular weight of a polyurethane obtained can be properly controlled and mechanical properties such as strength, elongation and wear resistance tend to be excellent. In a case where the curable composition is obtained by the one-shot method, an inert organic solvent can be used for the purpose of an improvement in workability in synthetic leather production. In general, a polyol (corresponding to the component (a), (b), (c), (d) or (g)) and a polyisocyanate (corresponding to the component (e)) are mixed to result in an increase in viscosity of a curable mixture over time. The inert organic solvent is added to the curable composition and thus the composition tends to be able to be decreased in viscosity and elongated in time which can be taken for coating.

In a case where such other additive(s) is(are) used, such other additive(s) may be added at the same time as collective mixing of the components (a), (b), (c), (d), (g) and (e), or may be mixed with the components (a), (b), (c), (d), (g) and (e) in advance.

### (Prepolymer method)

The prepolymer method may provide a curable composition as a mixture obtained by preparing an isocyanate group-terminated prepolymer composition and/or a hydroxyl group-terminated prepolymer composition obtained by reacting one or more selected from the component (a), the component (b), the component (c), the component (d), and, if necessary, the component (g), and compounding the isocyanate group-terminated prepolymer composition and/or the hydroxyl group-terminated prepolymer composition, and one or more among the component (a), the component (b), the component (c), the component (d) and the component (e), and, if necessary, the component (g). Herein, two or more of such isocyanate group-terminated prepolymers and/or such hydroxyl group-terminated prepolymers may be produced and each compounded.

Specific examples include a method involving first reacting the component (a) and/or the component (b) and/or the component (c) and/or the component (d), and, if necessary, the component (g) in advance to prepare a isocyanate group- or hydroxyl group-terminated prepolymer composition (also simply referred to as "prepolymer composition") and then adding the component (a) and/or the component (b) and/or the component (c) and/or the component (d), and, if necessary, the component (g) and/or the component (e).

The ratio between the component (a) and/or the component (b) and/or the component (c) and/or the component (d) and/or the component (g), and the component (e) in isocyanate group-terminated prepolymer composition synthesis is adjusted so that the equivalent ratio [Isocyanate equivalent]/[Hydroxyl group equivalent] between an isocyanate group included in the component (e) and a hydroxy group included in the component (a) and/or component (b) and/or the component (c) and/or the component (d) and/or the component (g) is 1.5 to 3.0, preferably 1.8 to 2.7, more preferably 1.9 to 2.3. The [Isocyanate equivalent]/[Hydroxyl equivalent] in isocyanate group-terminated prepolymer synthesis is 1.5 or more and thus the molecular weight of a prepolymer obtained can be properly controlled and the viscosity of the prepolymer can be decreased, and use of the organic solvent can be decreased. The [Isocyanate equivalent]/[Hydroxyl equivalent] in isocyanate group-terminated prepolymer synthesis is 3.0 or less and thus the unreacted component (e) tends to be able to be decreased and a polyurethane obtained tends to be able to be inhibited from being hardened.

The ratio between the component (a) and/or the component (b) and/or the component (c) and/or the component (d) and/or the component (g), and the component (e) in hydroxyl group-terminated prepolymer composition synthesis is adjusted so that the equivalent ratio [Hydroxyl group equivalent]/[Isocyanate equivalent] between an isocyanate group included in the component (e) and a hydroxyl group included in the component (a) and/or the component (b) and/or the component (c) and/or the component (d) and/or the component (g) is 1.5 to 3.0, preferably 1.8 to 2.7, more preferably 1.9 to 2.3. The [Hydroxyl group equivalent]/[Isocyanate equivalent] in hydroxyl group-terminated prepolymer synthesis is 1.5 or more and thus the molecular weight of a prepolymer obtained can be properly controlled and the viscosity of the prepolymer can be decreased, and use of the organic solvent can be decreased. The [Hydroxyl group equivalent]/[Isocyanate equivalent] in hydroxyl group-terminated prepolymer synthesis is 3.0 or less and thus the molecular weight and the molecular weight distribution of a polymer can be properly controlled and physical properties of a polyurethane obtained tend to be improved.

The ratio between the isocyanate group-terminated prepolymer composition obtained by reacting the component (a) and/or the component (b) and/or the component (c) and/or the component (d), and, if necessary, the component (g) in advance, and the component (e), is preferably 0.7 to 1.3, more preferably 0.8 to 1.2, further preferably 0.9 to 1.1, in terms of [Isocyanate equivalent of prepolymer composition]/[Hydroxyl value equivalent of component (a) and/or component (b) and/or component (c) and/or component (d) and/or component (g)]. The [Isocyanate equivalent of prepolymer composition]/[Hydroxyl value equivalent of component (a) and/or component (b) and/or component (c) and/or component (d) and/or component (g)] is 0.7 equivalents or more and 1.3 equivalents or less and thus the molecular weight of a polyurethane obtained can be properly controlled and mechanical properties such as strength, elongation and wear resistance tend to be excellent.

The ratio between the hydroxyl group-terminated prepolymer composition, and the component (e) and/or the isocyanate group-terminated prepolymer, is preferably 0.7 to 1.3, more preferably 0.8 to 1.2, further preferably 0.9 to 1.1, in terms of [Hydroxyl value equivalent of prepolymer composition]/[Isocyanate equivalent of component (e) and/or isocyanate group-terminated prepolymer]. The [Hydroxyl group equivalent of prepolymer composition]/[Isocyanate equivalent of component (e) and/or isocyanate group-terminated prepolymer] is 0.7 equivalents or more and 1.3 equivalents or less and thus the molecular weight of a polyurethane obtained can be properly controlled and mechanical properties such as strength, elongation and wear resistance tend to be improved.

In a case where the curable composition is obtained by the prepolymer method, an inert organic solvent can be used for the purpose of an improvement in workability in synthetic leather production. The amount of the inert organic solvent used is preferably 40% by mass or less. The isocyanate group-terminated prepolymer composition and the polycarbonate polyols are mixed to result in an increase in viscosity of the curable composition over time. The inert organic solvent is added to the curable composition and thus the composition tends to be able to be decreased in viscosity and elongated in time which can be taken for coating.

The inert organic solvent is used to result in an increase in viscosity during prepolymer synthesis, and thus a prepolymer reaction is preferably performed after the inert organic solvent is added to the component (a) and/or the component (b) and/or the component (c) and/or the component (d), and if necessary, the component (g) in advance before prepolymer synthesis. The inert organic solvent is used in prepolymer synthesis to result in a tendency to enable the reaction to uniformly progress.

Such other additive(s) is(are) used to also result in an increase in viscosity during prepolymer synthesis, and thus a prepolymer reaction is preferably performed after the inert organic solvent is added to the component (a) and/or the component (b) and/or the component (c) and/or the component (d), and, if necessary, the component (g) before prepolymer synthesis.

When the one-shot method and the prepolymer method are compared, the prepolymer method more easily allows for adjustment of the structure of a soft segment moiety to consequently lead to the occurrence of phase separation between a soft segment and a hard segment, resulting in a tendency to provide a polyurethane obtained which has excellent flexibility and low-temperature characteristics. Accordingly, the prepolymer method is preferable.

### <Method for producing synthetic leather>

Synthetic leather can be produced from the curable composition of the present embodiment. Examples of the method for producing synthetic leather from the curable composition of the present embodiment include a wet method involving wet coagulation by coating or impregnating a base material (base fabric) with the curable composition of the present embodiment, and a dry method involving coating release paper or a base material (base fabric) with the curable composition of the present embodiment and drying the resultant.

The method for producing synthetic leather, here used, can also be a transfer coating method (one dry method) involving coating release paper with the curable composition of the present embodiment to form a skin material, then laminating thereon a base material (base fabric) with the curable composition of the present embodiment, used as an adhesion layer, and thereafter removing the release paper. In other words, the composition of the present embodiment can be used in an adhesion layer for synthetic leather.

The dry method (transfer coating method) is suitably used because the amount of the inert organic solvent used in the curable composition of the present embodiment is decreased.

The method for producing synthetic leather is described below with a dry method as an example.

The base material (base fabric) here used can be any of various base materials, and examples thereof include a fibrous base material. Examples of the fibrous base material include a fiber aggregate obtained by forming a fiber into a non-woven fabric, a woven fabric, a knitted fabric, a raised fabric subjected to a buffing treatment, or the like, or a fiber aggregate in which each fiber is bound by an elastic polymer. Examples of the fiber for use in the fiber aggregate include natural fibers such as cotton, linen and wool, recycled or semi-synthetic fibers such as rayon and acetate, and synthetic fibers such as polyamide, polyester, polyacrylonitrile, polyvinyl alcohol and polyolefin. Such a fiber may be a single spun fiber or a mixed spun fiber. Other examples of the base material include paper, release paper, a plastic film such as polyester or polyolefin, a plate of a metal such as aluminum, and a glass plate.

The curable composition of the present embodiment can be subjected to coating by a method generally used. Examples of a coating tool can include a floating knife coater, a knife-over-roll coater, a reverse roll coater, a roll doctor coater, a gravure roll coater and a kiss roll coater.

Synthetic leather obtained can be used as it is. Alternatively, synthetic leather is obtained in a mode where the synthetic leather is coated with a polymer solution or emulsion of a polyurethane resin, vinyl chloride, a cellulose resin or the like, in order that various properties are further imparted. Synthetic leather can also be obtained in a mode of a laminate obtained by laminating a coating film obtained by drying of the polymer solution or emulsion applied separately on release paper and then peeling the release paper.

Hereinafter, the present embodiment is described with reference to the drawings. The drawings and production conditions described below correspond to one mode of the present embodiment, and the present embodiment is not limited thereto.

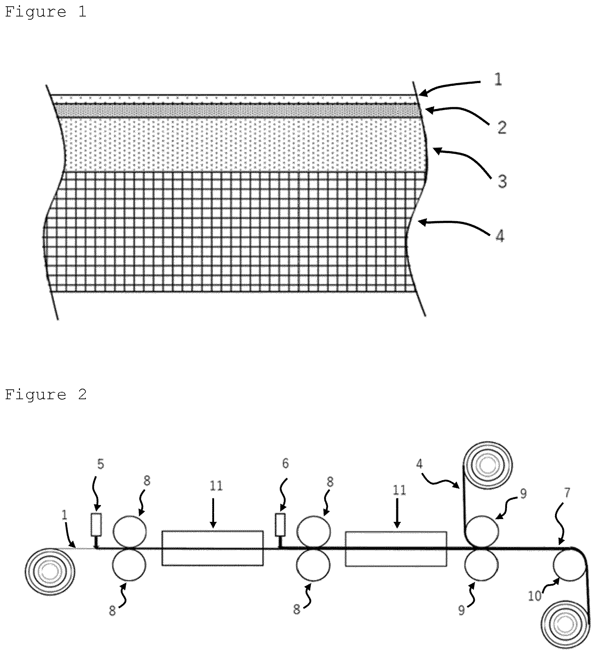

Figure 1 is a schematic cross-sectional view of a synthetic leather laminate produced by a dry method illustrated in Figure 2. The structure of the laminate has a skin layer 2 on a base material (knitted fabric formed from polyester fiber) 4 with an adhesion layer 3 being interposed therebetween. Release paper 1 used in production, although is attached onto the outermost layer, is peeled in use.

Figure 2 is a schematic diagram illustrating one method for producing a dry synthetic leather laminate sheet by use of the curable composition of the present embodiment. In the production method, first, a resin for a skin layer (Synthesis Example), adjusted at a predetermined temperature in advance, is allowed to flow down onto release paper 1 (to which a leather-like pattern is usually applied) through an applying machine 5.

The applying machine and the resin for a skin layer are adjusted to a temperature of usually 20 to 80°C, preferably 30 to 70°C, more preferably 40 to 60°C. The temperatures of the applying machine and the skin layer resin are each 20°C or more and thus the resin viscosity tends to be decreased and the flow rate tends to be stable to hardly cause the variation in application. The temperatures of the applying machine and the skin layer resin are each 80°C or less and thus a solvent used as a diluent tends to be hardly volatilized to easily provide a uniform thickness of the skin layer.

Thereafter, a sheet having a certain thickness is formed through a coating roll 8 and then allowed to pass through a drier 11 to perform curing, and drying of the inert organic solvent, thereby forming the skin layer 2 of the synthetic leather. The temperature of the drier is usually set to 60 to 150°C, preferably 70 to 130°C, more preferably 80 to 110°C. The drying time is usually, 2 minutes to 15 minutes, preferably 3 minutes to 10 minutes, more preferably 4 minutes to 7 minutes.

The resin for a skin layer is not particularly limited, may be prepred by a procedure shown in Synthesis Example or may also be a commercially available product. Examples include, but not particularly limited, "Crysbon" series manufactured by DIC Corporation and "Resamine" series manufactured by Dainichiseika Color & Chemicals Mfg. Co., Ltd.

Next, the curable composition of the present embodiment is obtained by mixing each raw material of the curable composition of the present embodiment, adjusted at a predetermined temperature in advance, by a mixing head 6, and is allowed to flow down to thereby form the adhesion layer 3.

In a case where the one-shot method is applied in production of the adhesion layer, main agents (the component (a), the component (b), the component (c), the component (d), and, if necessary, the component (g)) and a curing agent (the component (e)), if necessary, the inert organic solvent and the additive(s) are separately or simultaneously continuously fed to the mixing head 6 for mixing, and the resulting mixture is allowed to flow down onto the skin layer.

In a case where the prepolymer method is applied in production of the adhesion layer, the prepolymer composition (one or more) and raw materials (the component (a), the component (b), the component (c), the component (d), and, if necessary, the component (g)) other than the prepolymer composition, if necessary, the inert organic solvent and the additive(s) are separately or simultaneously continuously fed to the mixing head 6 for mixing, and the resulting mixture is allowed to flow down onto the skin layer. The curable composition is used in the adhesion layer and thus synthetic leather favorable in low-temperature characteristics and excellent in balance of physical properties including flexibility (texture), chemical resistance and heat resistance can be obtained and synthetic leather with a small amount of a solvent or with no solvent at all can be obtained.

The temperature of each of the components before mixing is usually adjusted to 20 to 60°C, preferably 30 to 50°C, more preferably 35 to 45°C. The temperature of the mixing head 6 is also usually adjusted to 20 to 60°C, preferably 30 to 50°C, more preferably 35 to 45°C. The temperature of each of the components before mixing and the temperature of the mixing head 6 are each 20°C or more and thus raw materials used, in particular, the polycarbonate polyols tend to be decreased in viscosity and the flow rate tends to be stabilized. The temperature of each of the components before mixing and the temperature of the mixing head 6 are each 60°C or less and thus the curing rate of the curable composition of the present embodiment tends to be properly controlled, the curable composition tends to be inhibited from being rapidly increased in viscosity, and synthetic leather having a uniform thickness tends to be obtained.

Thereafter, a sheet having a certain thickness is formed through the coating roll 8 and then allowed to pass through the drier 11 to perform curing, and drying of the inert organic solvent, thereby forming the adhesion layer 3 of the synthetic leather. Next, a base material 4 and the adhesion layer 3 are stacked and pressure bonded by a pressure bonding roll 9, and thereafter a sheet structure 7 is obtained and wound by a winding roll 10, to thereby obtain a desired synthetic leather laminate. The temperature of the drier 11 is usually set to 50 to 140°C, preferably 60 to 130°C, more preferably 80 to 120°C. The drying time is usually, 2 minutes to 15 minutes, preferably 3 minutes to 12 minutes, more preferably 4 minutes to 10 minutes.

While Figure 2 illustrates a production example of synthetic leather including three layers of skin layer/adhesion layer/base material, the adhesion layer can be increased in thickness to achieve a function of an intermediate layer, thereby allowing for a pseudo four-layered structure of skin layer/adhesion layer (also serving as intermediate layer)/base material. Of course, an intermediate layer can be separately used to provide, for example, a structure of skin layer/adhesion layer/intermediate layer/adhesion layer/base material. The adhesiveness of the skin layer and the base material is controlled by adjusting the curing state of the curable composition. Specifically, the synthetic leather laminate can be obtained by pressure bonding the curable composition of the present embodiment, which is in the state of being not completely cured, with the base material. A cured product can be obtained by controlling the temperature and the time, and, for example, the curing temperature in the drier 11 is set to 50 to 140°C, preferably 60 to 130°C, more preferably 80 to 120°C. The drying time is usually set to 2 minutes to 15 minutes, preferably 3 minutes to 12 minutes, more preferably 4 minutes to 10 minutes.

### <Application>

Synthetic leather obtained by using the curable composition of the present embodiment can be used in, for example, an interior material for automobiles, such as a seat for automobiles, furniture such as sofa, a clothing material, shoes, a bag, and other chandlery products.

### Examples

Hereinafter, the present invention is further specifically described with reference to Examples and Comparative Examples, but the present invention is not limited to these Examples as long as it does not depart from the gist thereof. In the following Examples and Comparative Examples, methods for analyzing and evaluating physical properties and the like of each of the components are as follows.

### [Analysis and evaluation of polycarbonate polyol]

### <Hydroxyl value of polycarbonate polyol>

The hydroxyl value was measured according to JIS K1557-1.

### <Compositional ratio (ratio of copolymerization) of polycarbonate polyol>

A 100-mL eggplant flask was charged with 1 g of a polycarbonate polyol sample, 30 g of ethanol and 4 g of potassium hydroxide were placed thereinto, and the resultant was reacted at 100°C for 1 hour. After a reaction liquid was cooled to room temperature, 2 to 3 droplets of phenolphthalein as an indicator were added thereto, and the liquid was neutralized by hydrochloric acid. After cooling in a refrigerator for 1 hour, a salt precipitated was removed by filtration and analyzed with gas chromatography (GC). In GC analysis, gas chromatography GC-14B (manufactured by Shimadzu Corporation in Japan) equipped with DB-WAX (manufactured by J&W in USA) as a column was used, diethylene glycol diethyl ether was used as an internal standard, a hydrogen flame ionization detector (FID) was used as a detector, and each of the components was quantitatively analyzed. The temperature rise profile of the column included retention at 60°C for 5 minutes and then a temperature rise to 250°C at 10°C/min.

The compositional ratio (ratio of copolymerization) of each polycarbonate polyol was determined from the molar ratio of each alcohol component detected, by the above analysis results.

### <Average number of functional groups of polycarbonate polyol>

The average number of functional groups of a polycarbonate polyol synthesized by using only a diol monomer as a raw material was 2. In a case where a polyfunctional monomer was included as a raw material, the average number of functional groups was determined as follows. The number average molecular weight (Mn) of each polycarbonate polyol was determined by gel permeation chromatography (GPC) analysis (see below, with respect to GPC apparatus and analysis conditions) with a calibration curve created from a standard polystyrene having a known molecular weight. The average number (n) of functional groups per molecule was determined from the hydroxyl value separately analyzed and the number average molecular weight (Mn) determined by GPC, according to expression (5). Average number of functional groups (n) = [Mn] × ([OH value] × 10-3/56.1)

### (GPC apparatus and analysis conditions)

GPC apparatus: HLC-8320 manufactured by Tosoh Corporation
Columns: TSKgel G4000H × 1
   G3000H × 1
   G2000H × 2
Eluent: tetrahydrofuran (THF)
Flow rate: 1.0 mL/min
Column temperature: 40°C
RI detector: RI (apparatus HLC-8320 built-in)

### <Measurement of melt viscosity>

After each polycarbonate polyol was heated to 50°C in advance, the melt viscosity was measured at 50°C with an E-type viscometer (TVE-22HT manufactured by Toki Sangyo Co., Ltd., cone: No. 6).

### [Analysis and evaluation of prepolymer composition]

### <Measurement of melt viscosity>

After each prepolymer composition was heated to 50°C in advance, the melt viscosity was measured at 50°C with an E-type viscometer (TVE-22HT manufactured by Toki Sangyo Co., Ltd., cone: No. 6) under a nitrogen atmosphere.

### <Measurement of isocyanate group concentration>

After 10 mL of a mixed solution of di-n-butylamine/toluene (mass ratio: 25.85/865) was diluted with 10 mL of dimethylformamide (DMF), the diluted product was titrated by a 0.1 N propanol hydrochloride solution to measure the amount of propanol hydrochloride necessary for neutralization, and the amount was defined as a blank value. Thereafter, 2 g of a prepolymer liquid was extracted, 10 mL of a mixed solution of di-n-butylamine/toluene was added thereto and stirred at room temperature for 30 minutes, thereafter the resultant was diluted with 10 mL of DMF and the diluted product was titrated by a 0.1 N propanol hydrochloride solution to measure the amount of the propanol hydrochloride solution necessary for neutralization in the same manner as in the blank measurement, and the amount of the remaining amine was quantitatively determined. The isocyanate group concentration was determined from the volume of the propanol hydrochloride solution necessary for neutralization, according to the following expression (6). Isocyanate group concentration (% by mass) = (V1 - V2) × f × 42 × 100/(W × 1000)
V1: Amount (mL) of 0.1 N propanol hydrochloride solution necessary for blank measurement
V2: Amount (mL) of 0.1 N propanol hydrochloride solution necessary for relevant measurement
W: Sample (g) used in relevant measurement
f: Factor of propanol hydrochloride solution

### [Analysis and evaluation of polyurethane film]

### <Production of polyurethane film>

Each of the components of the curable composition of the present invention, warmed to 40°C in advance, was added to a 200-mL separable four-necked flask equipped with a stirring blade (with four paddles inclined at 45 degrees) under a nitrogen atmosphere so that the amount of the curing composition was 80 g, and was stirred at 40°C for 5 minutes, and then the resultant was applied onto a polypropylene resin sheet (100 mm width, 1200 mm length, 1 mm thickness) in a size of 80 mm width, 100 mm length and 0.6 mm thickness by use of an applicator, and the resultant was dried on a hot plate at a surface temperature of 60°C for 2 hours and subsequently in an oven at 100°C for 12 hours. The resultant was further left to still stand under a constant-temperature and constant-humidity condition of 23°C and 55% RH for 12 hours or more, to thereby obtain a polyurethane film. The polyurethane film obtained was subjected to evaluation of various physical properties.

### <Flexibility of polyurethane film>

The flexibility of the polyurethane film was evaluated by five examiners, and evaluated as touch in touching of the polyurethane film with their hands. The evaluation was performed according to the following criteria.
○ means flexibleness, the evaluation results of the five examiners being consistent.
△ means slight rigidity, the evaluation results of the five examiners being consistent.
× means rigidity, the evaluation results of the five examiners being consistent.

### <Appearance of polyurethane film>

The surface appearance of the polyurethane film produced as described above was visually rated according to the following criteria.
○ means a smooth surface.
△ means a few streaks observed on the surface in the movement direction of the applicator.
× means many streaks observed on the surface in the movement direction of the applicator.

### <Measurement of molecular weight>

The polyurethane film was partially cut out to prepare an N,N-dimethylacetamide solution so that the polyurethane concentration was 0.1% by mass, and the number average molecular weight (Mn) and the weight average molecular weight (Mw) were measured in terms of standard polystyrene with a GPC apparatus [product name "HLC-8320" (columns: Tskgel Super HM-H × 4) manufactured by Tosoh Corporation, a solution of 2.6 g of lithium bromide dissolved in 1 L of dimethylacetamide was used as an eluent].

### <Evaluation of oleic acid resistance>

A test piece of 3 cm × 3 cm was cut out from the polyurethane film. The mass of the test piece was measured by a precision balance, and thereafter the test piece was loaded into a glass bottle having a volume of 250 mL, into which 50 mL of oleic acid was placed as a test solvent, and was left to still stand in a constant-temperature bath at 80°C under a nitrogen atmosphere for 16 hours. After the test, the test piece was taken out and the front and back surfaces thereof were lightly wiped by a paper wiper, thereafter mass measurement was performed with a precision balance, and the rate of change in mass (rate of increase) from that before the test was calculated. A rate of change in mass, closer to 0%, means more favorable oleic acid resistance.

### <Evaluation of ethanol resistance>

After a urethane film was produced by the same method as in <Evaluation of oleic acid resistance> described above, the urethane film was cut out to a test piece of 3 cm × 3 cm. The mass of the test piece was measured by a precision balance, and thereafter the test piece was loaded into a glass petri dish having an inner diameter of 10 cm, into which 50 mL of ethanol was placed as a test solvent, and immersed therein at a room temperature of about 23°C for 1 hour. After the test, the test piece was taken out and lightly wiped by a paper wiper, thereafter mass measurement was performed with a precision balance, and the rate of change in mass (rate of increase) from that before the test was calculated. A rate of change in mass, closer to 0%, means more favorable ethanol resistance.

### <Measurement of glass transition temperature (Tg)>

A test piece of 10 mm width, 40 mm length and 0.4 mm thickness was cut out from the polyurethane film. The viscoelasticity measurement apparatus ([TA7000series, DMA7100] manufactured by Hitachi High-Tech Science Corporation) was used, the test piece was mounted at a distance between chucks of 20 mm, and the viscoelasticity was measured with a temperature rise from -100°C to 100°C at 5°C/min. The peak of tanδ was read and the glass transition temperature (Tg) was determined.

### <Tensile test at room temperature (23°C)>

A polyurethane test piece was prepared as a strip of 10 mm width, 100 mm length and about 0.5 mm thickness, according to JIS K6301 (2010), a tensile test was performed at a distance between chucks of 20 mm, at a tensile speed of 100 mm/min and at a temperature of 23°C (relative humidity 55%) with a tensile tester (product name "Tensilon, Model RTE-1210" manufactured by Orientec Co., Ltd.), and the stress at 100% elongation of the test piece, and the strength at break and the elongation at break were measured.

### <Tensile test at low temperature>

A polyurethane test piece was prepared as a strip of 10 mm width, 100 mm length and about 0.5 mm thickness, according to JIS K6301 (2010), and a film was placed at a distance between chucks of 20 mm in a tensile tester (product name "Tensilon, Model RTE-1210" manufactured by Orientec Co., Ltd. equipped with a constant-temperature bath ("Model TLF-R3T-E-W" manufactured by Orientec Co., Ltd.). Subsequently, a tensile test was performed at a tensile speed of 100 mm/min after still standing at -20°C for 5 minutes, and the stress at 100% elongation of the test piece was measured.

### <Evaluation of heat resistance>

The polyurethane film was formed into a strip of 10 mm width, 100 mm length and about 50 µm thickness, and heated in a gear oven at a temperature of 120°C for 1000 hours. The breaking strength of the sample after heating was measured in the same manner as <Tensile test at room temperature>, and the percentage (%) of retention was determined.

### <Evaluation of hydrolysis resistance>

The polyurethane film was formed into a strip of 10 mm width, 100 mm length and about 50 µm thickness, and heated in a constant-temperature and constant-humidity bath at a temperature of 70°C and at a relative humidity of 95% for 400 hours. The breaking strength of the sample after heating was measured in the same manner as <Tensile test at room temperature>, and the percentage (%) of retention was determined.

### <Amount of solvent used>

The amount of the solvent used in preparation of a urethane film is preferably smaller from the viewpoint of a reduction in environmental load. The amount used was rated according to the following criteria.
⊚ an amount of the solvent used in the curable composition in the range of 0 to less than 20%.
○ an amount of the solvent used in the curable composition in the range of 20% or more and less than 40%.
△ an amount of the solvent used in the curable composition in the range of 40% or more and less than 60%.
× an amount of the solvent used in the curable composition of 60% or more.

### [Analysis and evaluation of synthetic leather]

### <Flexibility of synthetic leather>

The flexibility of synthetic leather was evaluated by five examiners, and evaluated as touch in touching of the synthetic leather with their hands. The evaluation was performed according to the following criteria.
○ means flexibleness, the evaluation results of the five examiners being consistent.
△ means slight rigidity, the evaluation results of the five examiners being consistent.
× means rigidity, the evaluation results of the five examiners being consistent.

### <Wear resistance of synthetic leather>

A load of 9.8 N was applied to a friction block covered with a cotton cloth, to wear the surface of synthetic leather. The friction block was reciprocated for wearing within 140 mm on the surface of synthetic leather at a rate of 60 times/min for 10000 times. The synthetic leather after wearing was observed and rated according to the following criteria.
○ means no cleavage or breakage in a resin layer.
△ means any cleavage generated in a resin layer.
× means any breakage generated in a resin layer.

### <Low temperature storage stability of synthetic leather>

Synthetic leather was wound on a paper tube having a diameter of 10 cm, and stored in a constant-temperature bath at a temperature of -20°C for one month. The synthetic leather was removed from the paper tube and left to still stand in a constant-temperature room at a temperature of 23°C and a humidity of 50% for one day, and then the surface thereof was visually observed and rated according to the following criteria.
O means a case of no crack or wrinkle.
△ means a case of any fine crack and wrinkle each having a size of 1 mm or less being observed.
× means a case of any fine crack and wrinkle each having a size of more than 1 mm being observed.

### <Low-temperature bendability of synthetic leather>

The synthetic leather was prepared as a strip of 20 mm width and 50 mm length, and a low-temperature bending test was performed with a DeMattia bending tester (manufactured by Yasuda Seiki Seisakusho, Ltd.) at a temperature of -10°C, a distance between chucks of 30 mm, a stroke of 15 mm, and a rate of 100 times/min for 30000 times. The test piece was taken out and the surface thereof was visually observed and evaluated according to the following criteria.
○ means a case of no crack or wrinkle.
△ means a case of any fine crack and wrinkle each having a size of 1 mm or less being observed.
× means a case of any fine crack and wrinkle each having a size of more than 1 mm being observed or a case of peeling between the base fabric and the adhesion layer being observed.

### <Method for evaluating adhesiveness (peel strength)>

An incision was made on the interface between a polyester base fabric and a polyurethane resin layer of synthetic leather in advance, the urethane resin layer peeled and the base fabric were each secured by chucks, and the peel strength between the polyurethane layer and the base fabric was measured at a temperature of 23°C and at a speed of 200 mm/min with a tensile tester (Tensilon, Model RTE-1210 manufactured by Orientec Co., Ltd. was used) according to JIS K6854-2, and evaluated as adhesiveness.

### <Chemical resistance of synthetic leather>

The synthetic leather was prepared as a strip of 20 mm width and 50 mm length, and 0.2 mL of oleic acid was dropped on the skin layer and left to still stand for 30 minutes. After the test, the surface was wiped by a paper wiper, and thereafter the appearance was confirmed and rated according to the following criteria.
○ means a case of no changes in embossed shape and in quality feeling of the synthetic leather.
△ means a case of thinning of an embossed shape, swelling of the synthetic leather, and the change in quality feeling of the synthetic leather being observed.
× means a case of the disappearance of an embossed shape and peeling of the adhesion layer.

### <Resistance to moist heat of synthetic leather>

The synthetic leather was prepared as a strip of 10 mm width and 50 mm length, and heated in a constant-temperature and constant-humidity bath at a temperature of 90°C and a relative humidity of 95% for 400 hours. The sample after heating was taken out, the surface thereof was visually observed and the texture thereof was confirmed, and these were rated according to the following criteria.
○ means a case of no changes in embossed shape and in quality feeling of the synthetic leather.
△ means a case of thinning of an embossed shape and the change in quality feeling of the synthetic leather being observed.
× means a case of the disappearance of an embossed shape and peeling of the adhesion layer.

### [Polymerization Example 1 of polycarbonate polyol]

A 2-L glass flask equipped with a rectifier filled with a regular packing and a stirring apparatus was loaded with 423 g (4.8 mol) of ethylene carbonate, 250 g (2.4 mol) of 1,5-pentanediol and 284 g (2.4 mol) of 1,6-hexanediol. Thereto was added of 0.09 g of titanium tetrabutoxide as a catalyst, a reaction was performed for 12 hours while the reaction temperature was 140 to 160°C and the pressure was dropped from 10 kPa to 2 kPa, and a mixture of ethylene glycol and ethylene carbonate, produced, was distilled off.

Thereafter, switching to simple distillation was made, and a monomer was distilled out by a reaction at 180°C for 5 hours while the pressure was gradually reduced to 0.5 kPa. The results of analysis of the polycarbonate diol obtained (also designated as PC1) were shown in Table 1.

### [Polymerization Example 2 of polycarbonate polyol]

Using the same apparatus as that of Polymerization Example 1 described above, the same polymerization as in Polymerization Example 1 was performed except that 423 g (4.8 mol) of ethylene carbonate, 216 g (2.4 mol) of 1,4-butanediol, 284 g (2.4 mol) of 1,6-hexanediol, and 0.09 g of titanium tetrabutoxide as a catalyst were loaded. The results of analysis of the polycarbonate polyol obtained (also designated as PC2) were shown in Table 1.

### [Polymerization Example 3 of polycarbonate polyol]

The same polymerization as in Polymerization Example 1 was performed except that the polymerization time after switching to simple distillation was 1 hours. The results of analysis of the polycarbonate polyol obtained (also designated as PC3) were shown in Table 1.

### [Polymerization Example 4 of polycarbonate polyol]

The same polymerization as in Polymerization Example 1 was performed except that the polymerization time after switching to simple distillation was 1.5 hours. The results of analysis of the polycarbonate polyol obtained (also designated as PC4) were shown in Table 1.

### [Polymerization Example 5 of polycarbonate polyol]

The same polymerization as in Polymerization Example 1 was performed except that 423 g (4.8 mol) of ethylene carbonate, 229 g (2.2 mol) of 1,5-pentanediol, 236 g (2.0 mol) of 1,6-hexanediol, 122 g (0.7 mol) of 1,10-decanediol, and 0.09 g of titanium tetrabutoxide as a catalyst were loaded to a 2-L glass flask equipped with a rectifier filled with a regular packing and a stirring apparatus. The results of analysis of the polycarbonate polyol obtained (also designated as PC5) were shown in Table 1.

### [Polymerization Example 6 of polycarbonate polyol]

Using the same apparatus as that of Polymerization Example 1 described above, the same polymerization as in Polymerization Example 1 was performed except that 423 g (4.8 mol) of ethylene carbonate, 507 g (4.3 mol) of 3 methyl-1,5-pentanediol, 59 g (0.5 mol) of 1,6-hexanediol, and 0.09 g of titanium tetrabutoxide as a catalyst were loaded. The results of analysis of the polycarbonate polyol obtained (also designated as PC6) were shown in Table 1.

### [Polymerization Example 7 of polycarbonate polyol]

The same polymerization as in Polymerization Example 1 was performed except that 423 g (4.8 mol) of ethylene carbonate, 567 g (4.8 mol) of 1,6-hexanediol, and 0.09 g of titanium tetrabutoxide as a catalyst were loaded to a 2-L glass flask equipped with a rectifier filled with a regular packing and a stirring apparatus. The results of analysis of the polycarbonate polyol obtained (also designated as PC7) were shown in Table 1.

### [Polymerization Example 8 of polycarbonate polyol]

The same polymerization as in Polymerization Example 1 was performed except that the polymerization time after switching to simple distillation was 3 hours. The results of analysis of the polycarbonate polyol obtained (also designated as PC8) were shown in Table 1.

### [Polymerization Example 9 of polycarbonate polyol]

The same polymerization as in Polymerization Example 1 was performed except that the polymerization time after switching to simple distillation was 10 hours. The results of analysis of the polycarbonate polyol obtained (also designated as PC9) were shown in Table 1.

**[Table 1]**

| | Proportion of copolymerization (mol%) | | | | | Hydroxyl value(mgK OH/g) | Average number of functional groups | Melt viscosity at 50°C (mPa·s) | Polycarbonate polyol obtained |
|---|---|---|---|---|---|---|---|---|---|
| | BDO | PDO | HDO | DDO | 3MPDO | | | | |
| Polymerization Example 1 | 0 | 48 | 52 | 0 | 0 | 56.1 | 2.0 | 11500 | PC1 |
| Polymerization Example 2 | 48 | 0 | 52 | 0 | 0 | 56.3 | 2.0 | 11900 | PC2 |
| Polymerization Example 3 | 0 | 49 | 51 | 0 | 0 | 226 | 2.0 | 320 | PC3 |
| Polymerization Example 4 | 0 | 47 | 53 | 0 | 0 | 138 | 2.0 | 930 | PC4 |
| Polymerization Example 5 | 0 | 44 | 41 | 15 | 0 | 55.5 | 2.0 | 8600 | PC5 |
| Polymerization Example 6 | 0 | 0 | 10 | 0 | 90 | 56.2 | 2.0 | 8500 | PC6 |
| Polymerization Example 7 | 0 | 0 | 100 | 0 | 0 | 56.2 | 2.0 | 11000 | PC7 |
| Polymerization Example 8 | 0 | 48 | 52 | 0 | 0 | 90.5 | 2.0 | 5400 | PC8 |
| Polymerization Example 9 | 0 | 48 | 52 | 0 | 0 | 38.1 | 2.0 | 33500 | PC9 |

### [Synthesis Example 1 of prepolymer composition]

A 500-mL separable flask sealed with nitrogen gas was loaded with 30 g (0.12 mol) of MDI, and warmed to 50°C. 120 g of methyl ethyl ketone (MEK) warmed to 50°C, and 120 g (0.06 mol) of polycarbonate polyol PC1 to which 0.007 g of dibutyltin dilaurate as a catalyst was added, were dropped under stirring over 30 minutes. The reaction was made at 50°C under stirring for 2 hours, to obtain a prepolymer composition with both terminals being isocyanate. The results of analysis of the prepolymer composition obtained (also designated as PCP1) were shown in Table 2.

### [Synthesis Examples 2 to 14 of prepolymer composition]

Each prepolymer composition was synthesized in the same manner as in Synthesis Example 1 of prepolymer composition except that the respective amounts of the polycarbonate polyol, MDI and MEK used were as shown in Table 2. The results of analysis of the prepolymer compositions obtained (also respectively designated as PCP2 to PCP14) were shown in Table 2.

**[Table 2]**

| Synthesis Example of prepolymer | Polycarbonate polyol used (component (a)/component (b)) | Mass of polycarbona te polyol (component a) (g) | Mass of polycarbona te polyol (component b) (g) | Mass of polyester polyol (g) | Mass of polyether polyol (g) | Mass of MDI (g) | Mass of MEK (g) | Melt viscosity at 50°C (mPa·s) | Isocyanat e group concentr ation (% by mass) | Prepolymer obtained |
|---|---|---|---|---|---|---|---|---|---|---|
| 1 | PC1/None | 120 | 0 | 0 | 0 | 30 | 120 | 7800 | 3.2 | PCP1 |
| 2 | PC1/None | 50 | 0 | 35 | 35 | 30 | 120 | 2100 | 3.1 | PCP2 |
| 3 | PC1/PC3 | 60 | 60 | 0 | 0 | 60 | 120 | 1700 | 4.0 | PCP3 |
| 4 | PC2/None | 140 | 0 | 0 | 0 | 30 | 120 | 8100 | 3.2 | PCP4 |
| 5 | None/PC3 | 0 | 60 | 0 | 0 | 60 | 30 | 1500 | 8.1 | PCP5 |
| 6 | PC4/None | 96 | 0 | 0 | 0 | 60 | 30 | 1600 | 6.1 | PCP6 |
| 7 | PC5/None | 120 | 0 | 0 | 0 | 30 | 120 | 4600 | 3.3 | PCP7 |
| 8 | PC6/None | 120 | 0 | 0 | 0 | 30 | 120 | 7200 | 3.3 | PCP8 |
| 9 | PC7/None | 120 | 0 | 0 | 0 | 30 | 120 | 7100 | 3.1 | PCP9 |
| 10 | PC8/None | 75 | 0 | 0 | 0 | 30 | 90 | 2200 | 4.6 | PCP10 |
| 11 | PC9/None | 177 | 0 | 0 | 0 | 30 | 120 | 32000 | 2.3 | PCP11 |
| 12 | PC1/None | 120 | 0 | 0 | 0 | 45 | 120 | 8200 | 4.4 | PCP12 |
| 13 | None/PC3 | 0 | 60 | 0 | 0 | 60 | 0 | 4300 | 8.1 | PCP13 |
| 14 | PC1/None | 120 | 0 | 0 | 0 | 10 | 120 | 8900 | - | PCP14 |

### [Example 1]

A 200-mL separable flask with a stirring blade, sealed with nitrogen, was loaded with 10 g of polycarbonate polyol PC1 warmed to 60°C in advance, 10 g of polycarbonate polyol PC3, 7 g of polyester polyol PEs1, 7 g of polyether polyol PE1, 10 g of MDI dissolved at 80°C in advance, 8.1 g of methyl ethyl ketone (MEK), and 0.003 g of dibutyltin dilaurate as a catalyst. After stirring at 60°C for 3 minutes, the resultant was applied onto a polypropylene resin sheet (100 mm width, 1200 mm length, 1 mm thickness) in a size of 80 mm width, 100 mmm length and 0.6 mm thickness by use of an applicator, and the resultant was dried on a hot plate at a surface temperature of 60°C for 2 hours and subsequently in an oven at 100°C for 12 hours. The resultant was further left to still stand under a constant-temperature and constant-humidity condition of 23°C and 55% RH for 12 hours or more, to thereby obtain a polyurethane film. The polyurethane film obtained was subjected to evaluation of various physical properties. The evaluation results were shown in Table 3.

### [Examples 2 to 15]

Each polyurethane film was obtained in the same manner as in Example 1 except that the types and the amounts of the raw materials were the types and the amounts described in Table 3. The evaluation results of the polyurethane film obtained were shown in Table 3.

### [Comparative Examples 1 to 5]

Each polyurethane film was obtained in the same manner as in Example 1 except that the types and the amounts of the raw materials were the types and the amounts described in Table 3. The evaluation results of the polyurethane film obtained were shown in Table 3.

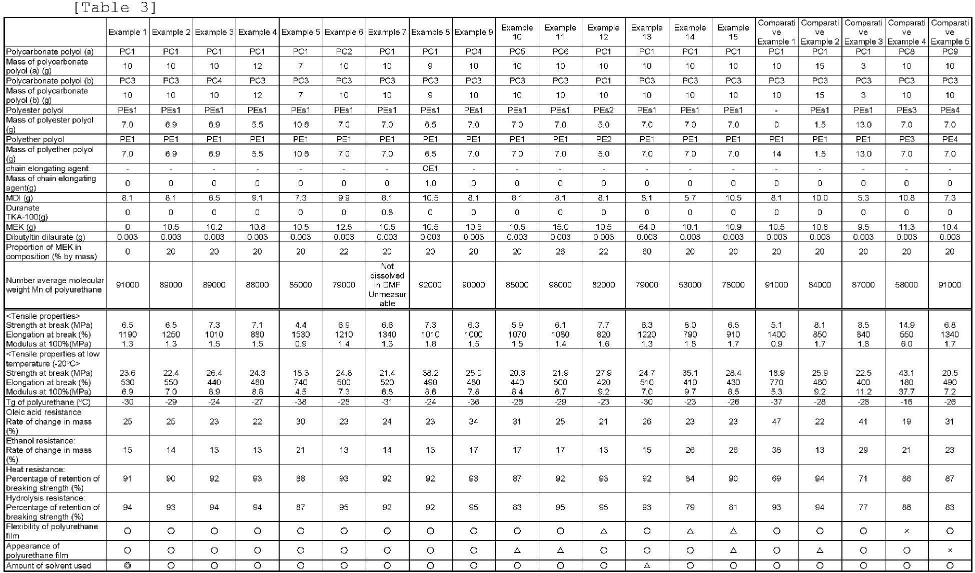

PEs1: Kuraray Polyol P-2010 (polyester polyol, hydroxyl value 56.2 mgKOH/g, number of functional groups 2.0, manufactured by Kuraray Co., Ltd.)

### PEs2: polyester polyol, hydroxyl value 62.6 mgKOH/g, number of functional groups 2.0

### [Polymerization Example of polyester polyol]

A 2-L glass flask equipped with a stirring apparatus, replaced with nitrogen, was loaded with 584 g (4.0 mol) of adipic acid and 567 g of (4.8 mol) of 3-methyl-1,5-pentanediol. Thereto was added 0.02 g of titanium tetrabutoxide as a catalyst, and a reaction was performed at a reaction temperature of 190 to 220°C and an ordinary pressure while water generated was distilled off. The reaction was stopped once an objective hydroxyl value was achieved with appropriate sampling performed, to obtain PEs2.
PEs3: Kuraray Polyol P-1010 (polyester polyol, hydroxyl value 112 mgKOH/g, number of functional groups 2.0, manufactured by Kuraray Co., Ltd.)
PEs4: Kuraray Polyol P-3010 (polyester polyol, hydroxyl value 37.3 mgKOH/g, number of functional groups 2.0, manufactured by Kuraray Co., Ltd.)
PE1: PTMG2000 (polyether polyol, hydroxyl value 56.4 mgKOH/g, number of functional groups 2.0, manufactured by Mitsubishi Chemical Corporation)
PE2: PTMG-1800 (polyether polyol, hydroxyl value 63.2 mgKOH/g, number of functional groups 2.0, manufactured by Asahi Kasei Corporation)
PE3: PTMG1000 (polyether polyol, hydroxyl value 112 mgKOH/g, number of functional groups 2.0, manufactured by Mitsubishi Chemical Corporation)
PE4: PTMG3000 (polyether polyol, hydroxyl value 38.0 mgKOH/g, number of functional groups 2.0, manufactured by Mitsubishi Chemical Corporation)
CE1: 1,4-butanediol (chain elongating agent manufactured by Mitsubishi Chemical Corporation)

### [Urethane solution for skin layer: Synthesis Example 1 of surface layer]

A 500-mL separable flask with a stirring blade, sealed with nitrogen, was loaded with 60 g of polycarbonate polyol PC1 warmed to 60°C in advance, 6 g of polyester polyol PEs1, 12 g of hydrogenated MDI, 300 g of methyl ethyl ketone (MEK), and 0.003 g of dibutyltin dilaurate as a catalyst. After stirring at 60°C for 30 minutes, 1 g of CE1 as a chain elongating agent was added and then stirring was continued at a temperature of 80°C. The reaction was continued until an increase in viscosity observed, and 1 g of ethanol was added to stop the reaction, to thereby obtain a urethane solution for a skin layer.

### [Example 16]

A 200-mL separable flask with a stirring blade, sealed with nitrogen, was loaded with PCP1 100 g of the prepolymer composition warmed to 50°C in advance and 5 g of polycarbonate polyol PC3, 15 g of polyester polyol PEs1, and 15 g of polyether polyol PE1. After stirring at 50°C for 5 minutes, the resultant was applied onto a polypropylene resin sheet (100 mm width, 1200 mm length, 1 mm thickness) in a size of 80 mm width, 100 mmm length and 0.6 mm thickness by use of an applicator, and the resultant was dried on a hot plate at a surface temperature of 60°C for 2 hours and subsequently in an oven at 100°C for 12 hours. The resultant was further left to still stand under a constant-temperature and constant-humidity condition of 23°C and 55% RH for 12 hours or more, to thereby obtain a polyurethane film. The polyurethane film obtained was subjected to evaluation of various physical properties. The evaluation results were shown in Table 4.

### [Examples 17 to 20]

Each polyurethane film was obtained in the same manner as in Example 16 except that the types and the amounts of the prepolymer composition and the polycarbonate polyol were the types and the amounts described in Table 4. The component (a), the component (b), the component (c), the component (d), and, if necessary, the component (g) are included in the prepolymer component and/or the polyol. The evaluation results of the polyurethane film obtained were shown in Table 4.

### [Comparative Example 6]

A polyurethane film was obtained in the same manner as in Example 16 except that the types and the amounts of the prepolymer composition and the polycarbonate polyol were the types and the amounts described in Table 4. The evaluation results of the polyurethane film obtained were shown in Table 4.

**[Table 4]**

| | Example 16 | Example 17 | Example 18 | Example 19 | Example 20 | Comparative Example 6 |
|---|---|---|---|---|---|---|
| Prepolymer | PCP1 | PCP2/ PCP5 | PCP2/ PCP5 | PCP2 | PCP14 | PCP5 |
| Mass of prepolymer (g) | 100 | 80/40 | 90/20 | 80 | 100 | 25 |
| Polyol | PC3/PEs1/PE 1 | - | PEs1/PE1 | PC3 | PC3/PEs1/PE 1 | PC1/PEs1 |
| Mass of polyol (g) | 5/15/15 | - | 15/15 | 10 | 5/15/15 | 23/17 |
| MDI(g) | - | - | - | - | 8 | - |
| Chain elongating agent | - | CE1 | - | - | - | - |
| Mass of chain elongating agent (g) | 0 | 8 | 0 | 0 | 0 | 0 |
| Proportion of MEK in curable composition (% by mass) | 33% | 34% | 31 % | 40% | 34% | 8% |
| Number average molecular weight Mn of polyurethane | 99000 | 107000 | 110000 | 94000 | 108000 | 148000 |
| <Tensile properties at room temperature> | | | | | | |
| Strength at break (MPa) | 6.1 | 7.1 | 4.2 | 5.1 | 5.9 | 9.0 |
| Elongation at break (%) | 1270 | 1150 | 1550 | 1380 | 1190 | 930 |
| Modulus at 100%(MPa) | 1.2 | 1.5 | 0.9 | 1.1 | 1.1 | 2.7 |
| <Tensile properties at low temperature (-20°C> | | | | | | |
| Strength at break (MPa) | 23.7 | 32.9 | 18.0 | 20.9 | 25.5 | 15.0 |
| Elongation at break (%) | 550 | 510 | 770 | 660 | 510 | 546 |
| Modulus at 100%(MPa) | 6.7 | 7.6 | 4.3 | 5.5 | 6.7 | 6.0 |
| Tg of polyurethane (°C) | -31 | -29 | -39 | -35 | -30 | -33 |
| Oleic acid resistance Rate of change in mass (%) | 23 | 22 | 29 | 26 | 23 | 28 |
| Ethanol resistance Rate of change in mass (%) | 15 | 13 | 19 | 17 | 15 | 15 |
| Heat resistance Percentage of retention of breaking strength (%) | 93 | 95 | 88 | 91 | 92 | 95 |
| Hydrolysis resistance Percentage of retention of breaking strength (%) | 95 | 94 | 88 | 92 | 92 | 88 |
| Flexibility of polyurethane film | ○ | ○ | ○ | ○ | ○ | △ |
| Appearance of polyurethane film | ○ | ○ | ○ | ○ | ○ | ○ |
| Amount of solvent used | ○ | ○ | ○ | ○ | ○ | ⊚ |

### [Example 21]

The same apparatus as the apparatus illustrated in Figure 2 was used, release paper (manufactured by LINTEC Corporation, R-86 M) having an embossed shape was used, a solution obtained by dispersing 5 parts by mass of a black pigment in 100 parts by mass of the resin for a skin layer synthesized in Synthesis Example 1 and leaving the resultant to still stand overnight was used and discharged through an applying machine, and was allowed to continuously flow down onto the release paper, and the thickness was adjusted to 50 µm with a coating roll. The resultant was allowed to pass through a drier at 120°C, to form a urethane layer serving as a skin layer.

Next, the raw materials used in Example 1 were continuously mixed by a mixing head at a temperature of 40°C so that the same compositional ratio as in Example 1 was achieved, and allowed to continuously flow down on the release paper and the thickness was adjusted to 250 µm with a coating roll. The resultant was allowed to pass through a drier at 120°C, to form a urethane layer serving as an adhesion layer.

Next, a base fabric (knitted fabric formed from polyester fiber) having a thickness of 600 µm was laminated with a pressure bonding roll, wound with a winding roll, and aged at 50°C for one week. The release paper was taken out, to obtain synthetic leather including a polyurethane laminate. The results of evaluation of physical properties of the synthetic leather were shown in Table 5.

### [Examples 22 to 37]

Each synthetic leather including a polyurethane laminate was obtained in the same manner as in Example 21 except that the type of the curable composition serving as an adhesion layer was that of composition shown in Table 5. The synthetic leather obtained was evaluated and the results were shown in Table 5.

### [Comparative Examples 7 to 12]

Each synthetic leather including a polyurethane laminate was obtained in the same manner as in Example 20 except that the type of the curable composition serving as an adhesion layer was that of composition shown in Table 5. The synthetic leather obtained was evaluated, and the results were shown in Table 5.

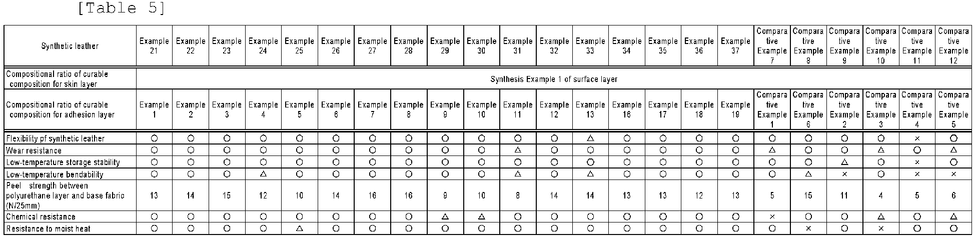

### Industrial Applicability

The curable composition of the present invention can be used in environment-responsive synthetic leather having excellent balance of physical properties including flexibility, chemical resistance, low-temperature characteristics, heat resistance and texture, and also allowing a small amount of solvent used.

### Reference Signs List

1 release paper
2 skin layer
3 adhesion layer
4 base material (knitted fabric)
5 applying machine (skin layer)
6 mixing head (adhesion layer)
7 sheet structure (dry synthetic leather product)
8 coating roll
9 pressure bonding roll
10 winding roll
11 drier

## Claims

1. A curable composition comprising:
a component (a): a polycarbonate polyol having a hydroxyl value of 40 to 75 mgKOH/g,
a component (b): a polycarbonate polyol having a hydroxyl value of 100 to 280 mgKOH/g,
a component (c): a polyether polyol,
a component (d): a polyester polyol, and
a component (e): a polyisocyanate having an average number of functional groups per molecule, of 2 to 6, wherein
a total amount of the component (a) and the component (b) is 30% by mass to 70% by mass based on a total amount of all the polyol components in the composition.

2. The curable composition according to claim 1, comprising:
a component (f): an isocyanate group-terminated prepolymer comprising a unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol, and a unit derived from a component (e): a polyisocyanate having an average number of functional groups per molecule, of 2 to 6.

3. A curable composition comprising:
a component (f): an isocyanate group-terminated prepolymer comprising a unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol, and a unit derived from a component (e): a polyisocyanate having an average number of functional groups per molecule, of 2 to 6, as constituent units, and
all components not comprised in the constituent units of the component (f), among the component (a), the component (b), the component (c) and the component (d), wherein
a total amount of a total amount of a unit derived from the component (a) and a unit derived from the component (b) in the constituent units in the component (f) and a total amount of the component (a) and the component (b) is 30% by mass to 70% by mass based on a total amount of all the polyol components in the composition.

4. A curable composition comprising:
a component (h): a hydroxyl group-terminated prepolymer comprising a unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol, and a unit derived from a component (e): a polyisocyanate having an average number of functional groups per molecule, of 2 to 6,
all components not comprised in the constituent units of the component (h), among the component (a), the component (b), the component (c), and the component (d), and
the component (e), wherein
a total amount of a total amount of a unit derived from the component (a) and a unit derived from the component (b) in the constituent units in the component (h) and a total amount of the component (a) and the component (b) is 30% by mass to 70% by mass based on a total amount of all the polyol components in the composition.

5. A curable composition comprising:
a component (f): an isocyanate group-terminated prepolymer comprising a unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol, and a unit derived from a component (e): a polyisocyanate having an average number of functional groups per molecule, of 2 to 6, as constituent units,
a component (h): a hydroxyl group-terminated prepolymer comprising a unit derived from at least one polyol selected from the group consisting of a component (a): a polycarbonate polyol having a hydroxyl value of 40 to 75 mgKOH/g, a component (b): a polycarbonate polyol having a hydroxyl value of 100 to 280 mgKOH/g, a component (c): a polyether polyol, and a component (d): a polyester polyol, and a unit derived from a component (e): a polyisocyanate having an average number of functional groups per molecule, of 2 to 6,
all components not comprised in the constituent units of the component (f) and the component (h), among the component (a), the component (b), the component (c), and the component (d), and
optionally the component (e), wherein
a total amount of a total amount of a unit derived from the component (a) and a unit derived from the component (b) in the constituent units in the component (f), a total amount of a unit derived from the component (a) and a unit derived from the component (b) in the constituent units in the component (h), and a total amount of the component (a) and the component (b) is 30% by mass to 70% by mass based on a total amount of all the polyol components in the composition.

6. The curable composition according to claim 1, wherein the polycarbonate polyols of the component (a) and the component (b) each comprise a repeating unit represented by the following formula (1) and a terminal hydroxyl group: 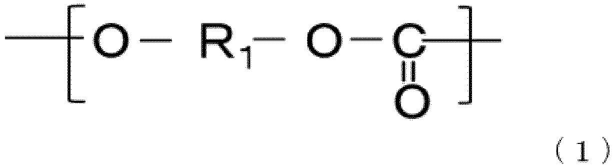 wherein R₁ is a divalent aliphatic or alicyclic hydrocarbon having 2 to 15 carbon atoms.

7. The curable composition according to claim 6, wherein 50% by mol or more of the repeating unit represented by the formula (1) comprises at least two repeating units selected from the formula (2), formula (3), and formula (4).

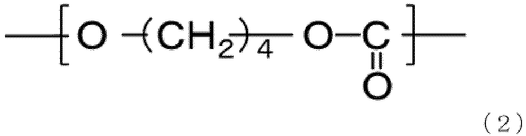

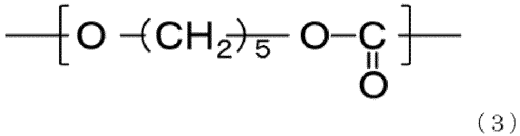

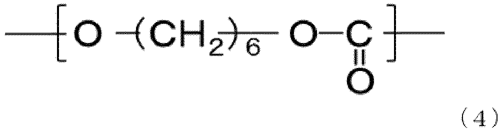

8. The curable composition according to claim 1, comprising a component (g): a chain elongating agent.

9. The curable composition according to claim 1, wherein the component (c): a polyether polyol and the component (d): a polyester polyol each have a hydroxyl value of 40 to 75 mgKOH/g.

10. The curable composition according to claim 1, comprising 40% by mass or less of an inert organic solvent based on a total amount of the composition.

11. The curable composition according to claim 1, to be used in an adhesion layer for synthetic leather.

12. Synthetic leather produced from the curable composition according to any one of claim 1 to claim 11.
